# EUROPEAN PATENT SPECIFICATION

(11) **EP 1 038 926 B1**
(45) Date of publication and mention of the grant of the patent: **10.08.2005**
(21) Application number: 00106351.0
(22) Date of filing: 23.03.2000
(51) Int. Cl.: C09C 1/00

(54) **Pleochroism powder and pleochroism printed article**
Pleochroisches Pulver und pleochroisches Druckerzeugnis
Poudre pleochroique et article imprime pleochroique

(30) Priority: 23.03.1999 JP 7799899
(43) Date of publication of application: 27.09.2000
(60) Divisional application: 05102020.4
(73) Proprietor: SHISEIDO COMPANY LIMITED, Chuo-ku, Tokyo 104-8010 (JP)
(72) Inventor: Ikuta, Yukie,c/o Shiseido Research Center (1), Yokohama-shi, Kanagawa 223-8553 (JP); Sakuma, Kenichi, c/o Shiseido Research Center (1), Yokohama-shi, Kanagawa 223-8553 (JP); Wada, Masayoshi, c/o Shiseido Research Center (1), Yokohama-shi, Kanagawa 223-8553 (JP); Kimura, Asa, c/o Shiseido Research Center (1), Yokohama-shi, Kanagawa 223-8553 (JP)
(74) Representative: Henkel, Feiler & Hänzel

(56) References cited:
- EP-A- 0 256 417
- EP-A- 0 971 246
- GB-A- 974 874
- US-A- 3 087 828
- US-A- 5 298 076
- US-B1- 6 238 471
- DATABASE WPI Section Ch, Week 199533 Derwent Publications Ltd., London, GB; Class A60, AN 1995-252438 XP002197147 & JP 07 157687 A (DAINICHISEIKA COLOR & CHEM MFG), 20 June 1995 (1995-06-20)
- DATABASE WPI Section Ch, Week 199533 Derwent Publications Ltd., London, GB; Class A60, AN 1995-252437 XP002197148 & JP 07 157686 A (DAINICHISEIKA COLOR & CHEM MFG), 20 June 1995 (1995-06-20)
- PATENT ABSTRACTS OF JAPAN vol. 017, no. 030 (C-1018), 20 January 1993 (1993-01-20) & JP 04 249584 A (TEIKA CORP), 4 September 1992 (1992-09-04)
- TAN JUNRU,HAN YUNFANG,HOU WENXIANG,CHEN XIUZENG,FU XIANSONG: "The preparation and characteristics of cobalt blue mica coated titania pearlescent pigment" DYES AND PIGMENTS, vol. 52, 2002, pages 215-222, XP004335195

## Description

### FIELD OF THE INVENTION

The present invention relates to a pleochroism powder and a pleochroism printed article and, in particular, to an improvement of the color tone thereof.

### BACKGROUND OF THE INVENTION

Lots of a titanium oxide coated mica pigment produce interference color and are widely used as a pearl pigment. A colored pigment may be coexisted thereto sometimes in order to impart a specific color tone to the titanium oxide coated mica. However, such colored pigment is generally inferior in light resistance. Accordingly, the colored pigments (e.g., Japanese Examined Patent Publication No. 4-61032) have been developed so far. The colored pigment obtains a colored appearance color by reducing a part of a titanium dioxide layer in titanium oxide coated mica pigment so as to make a dark lower titanium oxide and by emphasizing the interference color that titanium oxide coated mica is endowed fundamentally.

Such inorganic colored pigments have the advantages, i.e., chemically stable and excellent in light resistance.

Also, in addition to a specific beautiful color tone, the pigment is required to have various functions in recent year. For example, the pigment which can easily obtain multi-discoloring property that renders different color tone according to the viewing angle is attracted in view of obtaining the article that is difficult to duplicate by color copy.

However, the ordinary pigments only can be observed with the same color tone in general even if the color tone is observed from every direction. Also, by compounding the interference substance, the pigments merely obtain discoloring property in the degree that the interference color is observed to some extent according to the viewing direction.

### SUMMARY OF THE INVENTION

The present invention is achieved in view of the foregoing problems of the prior art, an object of the present invention is to provide a multi-discoloring pigment that the color tone thereof changes according to the viewing direction.

In order to achieve the foregoing object, a pleochroism powder of the present invention comprises: a flaky mica having a titanium oxide coating layer on the surface of said flaky mica and a coating layer of a composite oxide of cobalt and aluminum upon said titanium oxide coating layer.

Also, in the present invention, it is preferable that a mole ratio of said metal that is composed of said composite oxide is 50 to 91.5% of titanium dioxide, 7.5 to 49% of cobalt and 1 to 20% of aluminum.

Also, in the present invention, it is preferable that a mole ratio of said metal that is composed of said composite oxide is 50 to 96.5% of titanium dioxide, 2.5 to 7.5% of cobalt and 1 to 47.5% of aluminum.

Also, in the present invention, it is preferable that a mole ratio of said metal that is composed of said composite oxide is 50 to 72.5% of titanium dioxide, 7.5 to 30% of cobalt and 20 to 42.5% of aluminum.

Also, in the present invention, it is preferable that a mole ratio of said metal that is composed of said composite oxide is 50 to 98% of titanium dioxide, 1 to 2.5% of cobalt and 1 to 49% of aluminum.

Also, in the present invention, it is preferable that a hue of an appearance color which is rendered by the pleochroism powder is within a range: a: -31.13 to 11.35; b: - 29.46 to 31.22; and L: 30.82 to 88.23 in the case where the hue is displayed by Lab of Hunter.

Also, a pleochroism printed article of the present invention is applied a composition that comprising said pleochroism powder onto a base material, and a pleochroism printed article that is observed the different color tone by changing the observation angle to incident light.

Also, in the present invention, it is preferable that a color tone of the base material is within gray scale of white to black.

Also, in the present invention, it is preferable that a color tone of the base material is blue.

Also, in the present invention, it is preferable that a film thickness of the composition which comprising said pleochroism powder that is applied onto the base material is 5µm or more.

### BRIEF DESCRIPTION OF THE DRAWINGS

Fig. 1 is an explanatory view showing synthesizing methods of the pleochroism powder of Ti-Co-Al composite oxide coated type of the present invention.
Fig. 2 is a typical view of the pleochroism powder of Ti-Co-Al composite oxide coated type of the present invention.
Fig. 3 is an explanatory view showing the relationship of the ratio and color tone of the metals to be compounded to the pleochroism powder of Ti-Co-Al composite oxide coated type of the present invention.
Fig. 4 is an explanatory view of the method for measuring the discoloration degree of the pleochroism powder of Ti-Co-Al composite oxide coated type of the present invention.
Figs. 5 (a) and (b) are ab views showing the result of measuring the discoloration degree of the pleochroism powder of Ti-Co-Al composite oxide coated type of the present invention, respectively.
Fig. 6 is an explanatory view the relationship of the film thickness and the discoloration degree of the coating composition which compounding the pleochroism powder of Ti-Co-Al composite oxide coated type of the present invention.
Figs. 7 are a view of wavelength distribution of the reflected light from the substrate that the coating composition which compounding the pleochroism powder of Ti-Co-Al composite oxide coated type of the present invention (Example 1) is applied.
Figs. 8 (a) and (b) are ab views showing the result of Tables 5 and 6, respectively
Fig. 9 is an explanatory view showing a summary of the measuring method of Experiment 6.
Figs. 10 (a) and (b) are ab views showing the result of Tables 7 and 8, respectively.
Fig. 11 is a graph of the relation between the light-receiving angle and the discoloring of a pleochroism printed article of the present invention, that is made from the result of Tables 13,14 and 15.
Fig. 12 is a graph of the relation between the light-receiving angle and the brightness of a pleochroism printed article of the present invention, that is made from the result of Tables 13,14 and 15.

### BEST MODE FOR CARRYING OUT THE INVENTION

As a result of the diligent studies performed by the present inventors, it has been found that an excellent color tone and multi-discoloring property can be obtained by forming a composite oxide layer of titanium, cobalt and aluminium on the surface of mica. Accordingly, the present invention has been accomplished.

Namely, the pleochroism powder of the present invention comprises a flaky mica substrate having a titanium oxide coating layer on the surface of said flaky mica and a coating layer of a composite oxide of cobalt and aluminum upon said titanium oxide coating layer.

Mica used in the present invention may be any kind of mica. Muscovite mica that is commercially available is used in general. However, biotite and the like can be used according to circumstances. A particle diameter of mica is not restricted in particular. However, among mica that are commercially available, a mica which has small particle diameter and which is flat as much as possible, is preferable in the case where mica is used as a pearly pigment, because such mica can easily display beautiful color tone and nacreous luster. Accordingly, a particle diameter of mica is preferably 1µm to 150µm and more preferably 5µm to 60µm.

It is preferable that the pleochroism powder of the present invention is a cobalt aluminate coated titanium oxide coated mica wherein a composite oxide of cobalt and aluminium is coated on the surface of the titanium dioxide coated mica.

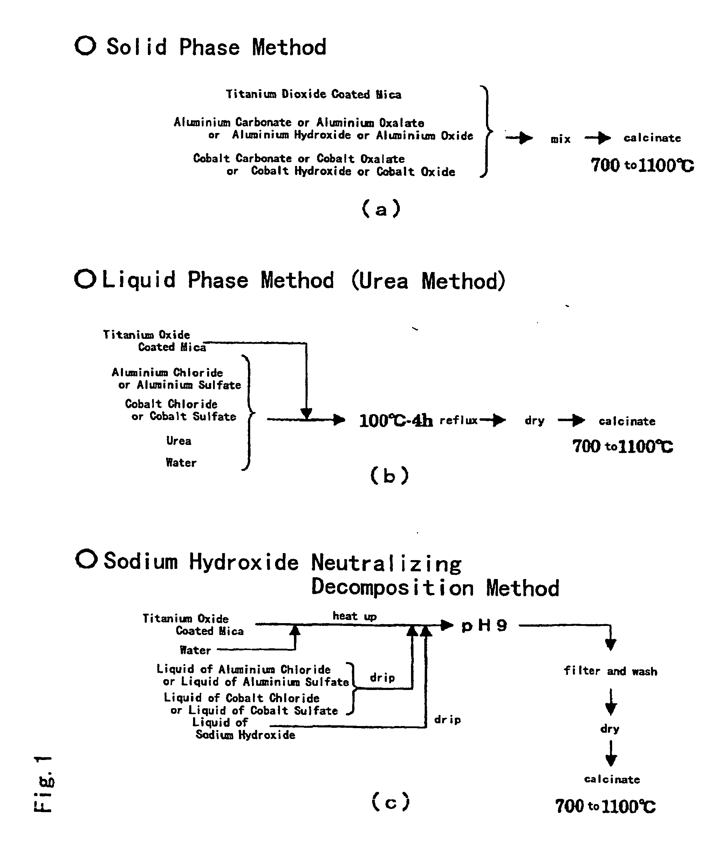

Therefore, as a manufacturing method, the pleochroism powder of the present invention can be manufactured by various methods such that cobalt and aluminium are coated on titanium oxide coated mica. Three kinds of methods such as solid phase method, liquid phase method (urea method) and sodium hydroxide neutralizing decomposition method are exemplified in Fig. 1.

In solid phase method, the pleochroism powder of Ti-Co-Al composite oxide coated type of the present invention can be obtained as shown in Fig. 1 (a). Namely, cobalt compounds such as cobalt carbonate, cobalt oxalate, cobalt hydroxide and cobalt oxide and aluminium compounds such as aluminium carbonate, aluminium oxalate, aluminium hydroxide and aluminium oxide are mixed with titanium oxide coated mica. The mixture is calcinated at 700°C to 1100°C, thereby yielding the pleochroism powder of Ti-Co-Al composite oxide coated type of the present invention.

In liquid phase method, the pleochroism powder of Ti-Co-Al composite oxide coated type of the present invention can be obtained as shown in Fig. 1 (b). Namely, aluminium chloride or aluminium sulfate, cobalt chloride or cobalt sulfate, urea and water are mixed and titanium oxide coated mica is added thereto. After refluxing and drying the mixture for 4 hours at 100°C, the resultant is calcinated at 700°C to 1100°C. Thereby yielding the pleochroism powder of Ti-Co-Al composite oxide coated type of the present invention.

In sodium hydroxide neutralizing decomposition method, the pleochroism powder of Ti-Co-Al composite oxide coated type of the present invention can be obtained as shown in Fig. 1 (c). Namely, titanium oxide coated mica is dispersed into water and the solution is heated up to approximately 80°C. After dripping aluminium chloride or aluminium sulfate and cobalt chloride or cobalt sulfate thereto, sodium hydroxide is further dripped thereto so as to adjust pH to 9. After the solution is filtered, washed with water, and dried, the resultant is calcinated at 700°C to 1100°C. Thereby yielding the pleochroism powder of Ti-Co-Al composite oxide coated type of the present invention.

Also, in the manufacturing method of Fig. 1 (c), the pleochroism powder of Ti-Co-Al composite oxide coated type of the present invention can be obtained by using the other steps. Namely, sodium hydroxide is dripped to a titanium oxide coated mica-dispersed water that is heated up to approximately 80°C so as to adjust pH to 9, while aluminium chloride or aluminium sulfate and cobalt chloride or cobalt sulfate are dripped thereto simultaneously.

The method that aluminium and cobalt are coated onto the surface of titanium oxide coated mica simultaneously is shown. However, it may coat cobalt after coating aluminium or may coat aluminium after coating cobalt. Further, the combination of the materials such as cobalt carbonate, cobalt oxalate, cobalt hydroxide, cobalt oxide, cobalt chloride or cobalt sulfate and aluminium carbonate, aluminium oxalate, aluminium hydroxide, aluminium oxide, aluminium chloride or aluminium sulfate is not restricted in particular. Further, each method such as solid phase method, liquid phase method and sodium hydroxide neutralizing decomposition method indicated hereinbefore may be combined in the case where aluminium and cobalt are coated separately.

As a method for obtaining the pleochroism powder of Ti-Co-Al composite oxide coated type of the present invention, the pleochroism powder of Ti-Co-Al composite oxide coated type can be obtained by coating aluminium and cobalt onto the surface of titanium oxide coated mica and calcinating it at 700°C to 1100°C as mentioned hereinbefore. Therefore, the manufacturing method is not restricted to the method indicated in here and it is possible to obtain by various methods that can coat aluminium and cobalt on the surface of titanium oxide coated mica.

Further, in the case of aluminium and cobalt are coated separately, aluminum and cobalt are forming separate layers when titanium dioxide coated mica is coated. However, aluminum and cobalt become one composite oxide layer by calcinating.

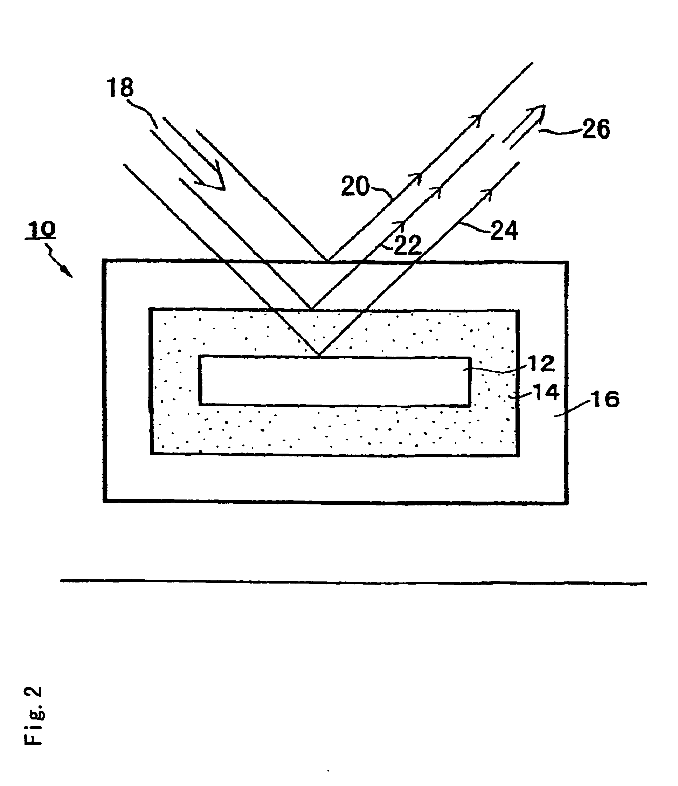

A typical view of the pleochroism powder of Ti-Co-Al composite oxide coated type of the present invention is shown in Fig. 2. As shown in Fig. 2, mica 12 exists in the center of a pleochroism powder 10 of Ti-Co-Al composite oxide coated type of the present invention. A titanium dioxide layer 14 is formed on the outer periphery of mica 12 and a Co-Al composite oxide layer 16 is formed on the outer periphery thereof.

It is found that the pleochroism powder of Ti-Co-Al composite oxide coated type of the present invention that have the construction mentioned in above renders various appearance colors according to the ratio of titanium dioxide, aluminium and cobalt.

In the case where the mole ratio of the metal that is composed of said composite oxide is 50 to 91.5% of titanium dioxide, 7.5 to 49% of cobalt and 1 to 20% of aluminium, the appearance color of the obtained pleochroism powder of Ti-Co-Al composite oxide coated type renders yellow green. In here, a is -20.00 to 5.00, b is 0 to 30.00 and L is 40.00 to 70.00 in case of converting the color by Lab of Hunter.

Also, in the case where the mole ratio of the metal that is composed of said composite oxide is 50 to 96.5% of titanium dioxide, 2.5 to 7.5% of cobalt and 1 to 47.5% of aluminium, the appearance color of the obtained pleochroism powder of Ti-Co-Al composite oxide coated type renders blue. In here, a is -20.00 to 5.00, b is -30.00 to -8.00 and L is 50.00 to 80.00 in case of converting the color by Lab of Hunter.

Also, in the case where the mole ratio of the metal that is composed of said composite oxide is 50 to 72.5% of titanium dioxide, 7.5 to 30% of cobalt and 20 to 42.5% of aluminium and the mole ratio of the metal that is composed of said composite oxide is 50 to 98% of titanium dioxide, 1 to 2.5% of cobalt and 1 to 49% of aluminium, the appearance colors of the obtained pleochroism powder of Ti-Co-Al composite oxide coated type render green to blue green. In here, a is -20.00 to 5.00, b is -8.00 to 0 and L is 40.00 to 85.00 in case of converting the color by Lab of Hunter.

These results are shown in Table 1 as follows.

**Table 1**

| Appearance Color | TiO₂ | Co | Al |
|---|---|---|---|
| Yellow Green | 50%-91.5% | 7.5%-49% | 1%-20% |
| Blue | 50%-96.5% | 2.5%-7.5% | 1%-47.5% |
| Green to Blue Green | 50%-72.5% | 7.5%-30% | 20%-42.5% |
| | 50%-98% | 1%-2.5% | 1%-49% |

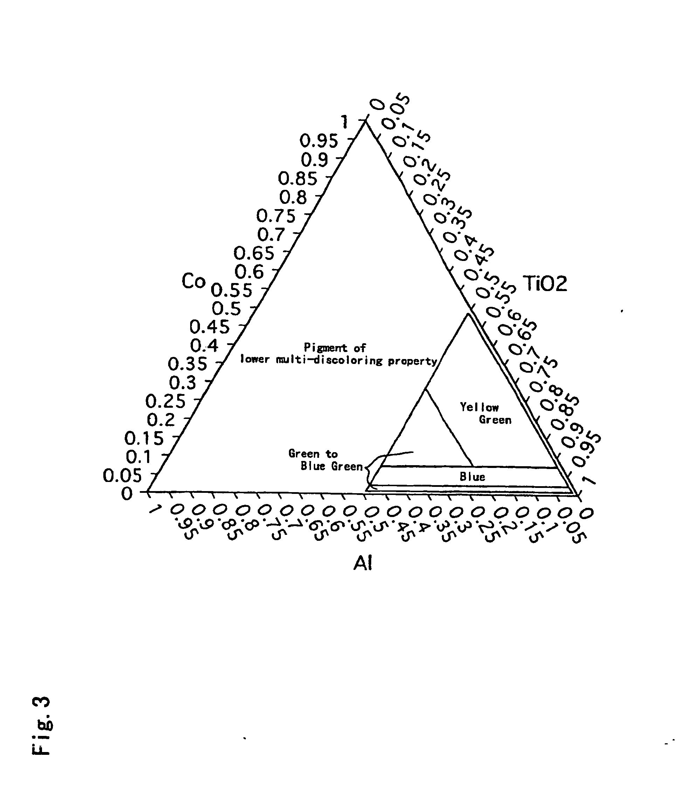

Further, Table 1 is shown schematically in Fig. 3.

As shown in Fig. 3, it is found that the appearance color whose color tone is in wide range of yellow green to blue can be obtained by changing the ratio of TiO₂-Al-Co. This change means the appearance colors changes subtly by changing the ratio of TiO₂-Al-Co, even when the appearance colors are similar each other. Further, the Ti-Co-Al composite oxide coated mica that coat such TiO₂-Al-Co on the surface of mica shows characteristic property that the color changes according to the viewing angle. Hereupon, multi-discoloring property that is shown by the pleochroism powder of Ti-Co-Al composite oxide coated type of the present invention is explained with referring to Fig. 2 again.

As mentioned hereinbefore, mica 12 exists in the center of the pleochroism powder 10 of Ti-Co-Al composite oxide coated type of the present invention. The titanium dioxide layer 14 is formed on the outer periphery of mica 12 and the Co-Al composite oxide layer 16 is formed on the outer periphery thereof.

When white light 18 is irradiated to the pleochroism powder 10 of Ti-Co-Al composite oxide coated type, a part of white light 18 reflects on the surface of the Co-Al composite oxide layer 16 and becomes a reflected light 20. The reflected light 20 renders the color tone of the appearance color that the pleochroism powder 10 of Ti-Co-Al composite oxide coated type is endowed fundamentally.

White light 18 which does not reflect on the surface of the Co-Al composite oxide layer 16 advances to the inside of the pleochroism powder of Ti-Co-Al composite oxide coated type and produces a reflected light on the surfaces of titanium oxide layer 14 and mica 12 by a great change of refractive index. Then, the reflected light 22 of the titanium dioxide layer 14 and the reflected light 24 of the surface of mica 12 produce a reflected interference light 26 which has a specific color tone by the optical path difference that is due to the layer thickness of the titanium dioxide layer 14.

Accordingly, the color tone that the pleochroism powder 10 of Ti-Co-Al composite oxide coated type is endowed fundamentally by the reflected light 20 is observed from the angle that the reflected interference light 26 can not be observed. The color that the reflected interference light 26 and the general reflected light 20 are mixed is observed from the angle that the reflected interference light 26 can be observed.

It is characteristic in the present invention that the Co-Al composite oxide layer 16 has extremely high in transparency and hardly influences on the reflected interference light 26. Also, the pleochroism powder 10 of Ti-Co-Al composite oxide coated type of the present invention can obtain multi-discoloring property of various color tones by combining the appearance color and the color tone of the reflected interference light 26, because the color of the reflected interference light 26 can be controlled by adjusting the layer thickness of the titanium dioxide layer 14 that is coated on the surface of mica 12.

Also, the Ti-Co-Al composite oxide coated mica that is not within the ratio of TiO₂-Al-Co mentioned in above, is inferior in multi-discoloring property. However, it is possible enough to use such Ti-Co-Al composite oxide coated mica as a pigment because it has beautiful glossiness and color tone.

The reason that the titanium dioxide and the cobalt aluminate are used in the pleochroism powder of Ti-Co-Al composite oxide coated type of the present invention as the substance that coated a mica surface is explained as below. The reason why the titanium dioxide is used in the pleochroism powder of the present invention is that the titanium dioxide is capable to generate the reflected interference color by the titanium dioxide is coated onto mica surface. The reason why the cobalt aluminate is used in the pleochroism powder of the present invention is that the cobalt aluminate which becomes a most outer layer is stable to the undiluted acid and undiluted alkali and has excellent heat resistance. Also, the cobalt aluminate is capable to give the multi-discoloring property to the pleochroism powder of Ti-Co-Al composite oxide coated type of the present invention by combining with the reflected interference color of titanium dioxide coated mica, because the cobalt aluminate has a high transparent property and is high colorfulness blue pigment.

Further, there is not the restriction that the titanium dioxide layer 14 and the Co-Al composite oxide layer 16 have to touch. However, it should avoid that to prepare a layer of lower refractive index comparison with the refractive index of titanium dioxide layer 14 between the titanium dioxide layer 14 and the Co-Al composite oxide layer 16. Because it has changed color tone of the reflected interference color by changing thickness of the titanium dioxide layer which is adjusted optically and has reduced the colorfulness of the reflected interference color very much.

Also, it is preferable that the coating order on the mica is titanium dioxide and Co-Al composite oxide from the inside. For example, to coat on the mica in order of Co-Al composite oxide and titanium dioxide, remarkable bad influence is exerted to the multi-discoloring property without the reflected interference color is generated well.

As the mentioned above, the pleochroism powder of Ti-Co-Al composite oxide coated type has characteristics that excellent in light resistance, stability to time passing and chemical stability since the powder is formed by covered with inorganic compound.

Also, a pleochroism printed article of the present invention is applied a composition that comprising said pleochroism powder onto a base material.

In the case where the pleochroism powder of the present invention is used as a pigment, it is possible to use by compounding the proper amount of the pleochroism powder to the coating composition. The amount of the pleochroism powder for compounding into the coating composition is not restricted in particular because the amount depends on the subject that uses the composition. However, it is preferable that the amount is generally 5 to 35 wt% with respect to the whole amount of the composition. Hiding power is reduced if the amount of the pleochroism powder is small. Also, if the amount of the pleochroism powder is too much, dispersion of the pleochroism powder in the composition becomes heterogeneously, the appearance of the composition becomes spotted, and viscosity of the composition comes to rise. Consequently, it sometimes causes unfavorable influence on workability and printability.

Though the coating composition is not restricted in particular, the compositions which compound a binder resin, a solvent and the like are exemplified. The binder resin can stick the pleochroism powder on the substrate in stable. After applying the coating composition on the substrate, the binder resin forms a film on the substrate in the state that the solvent in the composition is volatilized and embeds the pleochroism powder. The binder resin is not restricted in particular since the binder resin is selected according to compatibility with the substrate, film strength of a forming film, film pressure and the like. However, the binder resin that is generally used as the binder of coating material or printing ink can be used. Examples of the binder include gilsonite, maleic resin, cyclorubber, hardened rosin, petroleum resin, nitrocellulose, acrylic resin, polyurethane resin, chlorinated polypropylene, vinyl chloride-vinyl acetate copolymer resin, ethylene-vinyl acetate copolymer resin, vinyl chloride, polyester resin, alkyd resin, linseed oil, modified phenol resin, fumaric resin, epoxy ester resin, epoxy amino resin, epoxy phenol resin, polyester resin, vinyl resin, polyamide resin, petroleum varnish, ketone resin, chlorinated rubber, ethyl cellulose, urea resin, melamine resin and the like.

Also, as a solvent that is compounded together with the pleochroism powder of the present invention, the solvent, which is usually used in coating material or ink, can be used. The solvent is not restricted in particular as long as the solvent can favorably dissolve the binder resin and improve its workability, and also can satisfactory disperse and compound the pleochroism powder into the resin solution. Examples of the solvent include toluene, xylene, n-hexane, cyclohexane, methyl acetate, ethyl acetate, isopropyl acetate, n-propyl acetate, n-butyl acetate, isobutyl acetate, methanol, ethanol, n-propyl alcohol, isopropyl alcohol, n-butyl alcohol, isobutyl alcohol, acetone, methyl ethyl ketone, methyl isobutyl ketone, propylene glycol monomethyl ether, ethylene glycol monomethyl acetate, ethylene glycol monoethyl ether, ethylene glycol monoethyl ether acetate and the like.

A volatile organic solvent is mainly used as the solvent. Water and the like may be compounded as the solvent.

When the coating composition that compounds the pleochroism powder of the present invention is used, in addition to the ingredients mentioned above, various additives that are usually compounded into coating material or ink may be compounded within the range that the effect of the present invention is not spoiled, so as to adjust the properties of the composition. For example, plasticizers, waxes, humectants, stabilizers, dyes, antistatic agents, anti-foaming agents, antioxidants, leveling agents, polymerization inhibitors, fillers and the like are listed.

As the substrate to be applied by the coating composition which compounds the pleochroism powder of the present invention as mentioned in above, paper, paperboard, cloth, leather, metal, plastic or the like is listed. However, it is not restricted thereto in particular Also, the various shapes thereof may be applicable in the substrate. The substrate may be processed with applying, printing or coating, in advance.

In the present invention, in order to obtain a color and high brilliant impression, and an excellent color tone, a weight ratio between the pleochroism powder in the coating composition and the binder resin is preferably 1 : 20 to 3.5 : 10. When such the coating composition is applied onto the substrate, the solvent in the composition is volatilized by drying and a binder resin film is formed on the substrate. The pleochroism powder is held into the film, thereby forming a coating film. Accordingly, in the coating film on the substrate, the weight ratio between the pleochroism powder and the binder resin exist within the range of 1 : 20 to 3.5 : 10. The coating film that has such composition ratio provides the substrate with color appearance and high brilliant impression, and demonstrates a favorable color tone.

Also, as the color tone of the substrate to be applied with the coating composition which comprises the pleochroism powder of the present invention, it is preferable that the color tone is within gray scale of white to black achromatic color or blue of yellow green to indigo blue on the point that multi-discoloring property of the pleochroism powder of the present invention is sufficiently displayed. Also, it is preferable that the coating composition which comprises the pleochroism powder of the present invention is applied with 5µm or more of application thickness on the point that multi-discoloring property of the pleochroism powder of the present invention is sufficiently displayed.

A method for coating in the present invention is the method for coating the composition that comprises the pleochroism powder of the present invention is applied onto a part or a whole part of the surface of the substrate. Its concept includes a general printing method. A method for applying includes a general application method, printing method or coating technology. Examples of the printing method include letterpress printing, intaglio printing, gravure printing, screen printing, flexo printing, offset printing, ink jet printing, electrostatic printing and the like. Also, the application method such as brush application, spray coating, drum coating, stencil application, electrostatic coating, flow coating, dip coating, roller coating or spray coating can be used.

Also, the pleochroism printed article of this invention can be manufactured even if it is the following production methods.

One of the methods is the following. Firstly, a composition comprising a titanium dioxide coated mica which generates reflected interference color by coated titanium dioxide on a mica surface is applied onto a base material. And transparent colored composition comprising a pigment or a dye that have a color tone which is in the relation of the nearly complementary color to reflection interference color of said titanium dioxide coated mica generates is applied onto said a composition. The pleochroism printed article can be got through those the procedure.

Also, another method is the following. Firstly, a titanium dioxide coated mica which generates reflected interference color by coated titanium dioxide on a mica surface is mixed with transparent colored composition comprising a pigment or a dye that have a color tone which is in the relation of the nearly complementary color to reflection interference color that said titanium dioxide coated mica generates. The obtained composition is applied onto a base material. The pleochroism printed article can be got through those the procedure, too.

The pleochroism printed article, which is obtained according to above-mentioned procedure, shows the different color tone by changing the observation angle to incident light.

### EXAMPLES

### Example 1

A pleochroism powder of Ti-Co-Al composite oxide coated type in accordance with one example of the present invention was manufactured according to Fig. 1 (c).

Namely, 1000.00 parts by weight of water was added with respect to 100.00 parts by weight of titanium dioxide coated mica and the solution was stirred and dispersed. 11.89 parts by weight of cobalt chloride hydrate (CoCl₂·6H₂O) and 72.27 parts by weight of aluminium sulfate hydrate (Al₂(SO₄)₃·14H₂O) were dissolved to water so as to make a solution. The latter was dripped down to the former and the mixture was heated up to 80°C while stirring. 2 mol/liter of sodium hydroxide solution (NaOH) was further dripped down thereto and the pH of the solution was adjusted to 9. The generated Ti-Co-Al composite oxide coated mica was filtered and washed with water. After drying it for 12 hours at 150°C, it was calcinated for 1 hour at 900°C.

In the resulting the pleochroism powder of Ti-Co-Al composite oxide coated type, mole ratio of the composite oxide was 67.6% of titanium dioxide, 4.7% of cobalt and 27.7% of aluminium. Also, the appearance color was light blue and the interference color was yellow.

### Example 2

A pleochroism powder of Ti-Co-Al composite oxide coated type in accordance with one example of the present invention was manufactured according to Fig. 1 (c).

1000.00 parts by weight of water was added with respect to 100.00 parts by weight of titanium dioxide coated mica having a layer thickness of titanium dioxide which produces red interference color, and the solution was stirred and dispersed. 12.10 parts by weight of cobalt chloride hydrate (CoCl₂·6H₂O) and 73.53 parts by weight of aluminium sulfate hydrate (Al₂(SO₄)₃·14H₂O) were dissolved to water so as to make a solution. The latter was dripped down to the former and the mixture was heated up to 80°C while stirring. 2 mol/liter of sodium hydroxide solution (NaOH) was further dripped down thereto and the pH of the solution was adjusted to 9. The generated Ti-Co-Al composite oxide coated mica was filtered and washed with water. After drying it for 12 hours at 150°C, it was calcinated for 1 hour at 900°C.

Though the resulting pleochroism powder of Ti-Co-Al composite oxide coated type was different from the one of Example 1 in terms of the layer thickness of titanium dioxide, nevertheless the mole ratio of composite oxide is same with the one of Example 1, i.e., mole ratio of the composite oxide was 67.6% of titanium dioxide, 4.7% of cobalt and 27.7% of aluminium. Also, the appearance color was light blue and the interference color was red.

### Example 3

A pleochroism powder of Ti-Co-Al composite oxide coated type in accordance with one example of the present invention was manufactured according to Fig. 1 (c).

1000.00 parts by weight of water was added with respect to 100.00 parts by weight of titanium dioxide coated mica having a layer thickness of titanium dioxide which produces green interference color, and the solution was stirred and dispersed. 14.18 parts by weight of cobalt chloride hydrate (CoCl₂·6H₂O) and 86.22 parts by weight of aluminium sulfate hydrate (Al₂(SO₄)₃· 14H₂O) were dissolved to water so as to make a solution. The latter was dripped down to the former and the mixture was heated up to 80°C while stirring. 2 mol/liter of sodium hydroxide solution (NaOH) was further dripped down thereto and the pH of the solution was adjusted to 9. The generated Ti-Co-Al composite oxide coated mica was filtered and washed with water. After drying it for 12 hours at 150°C, it was calcinated for 1 hour at 900°C.

Though the resulting pleochroism powder of Ti-Co-Al composite oxide coated type was different from the ones of Examples 1 and 2 in terms of the layer thickness of titanium dioxide, nevertheless the mole ratio of composite oxide is same with the ones of Examples 1 and 2, i.e., mole ratio of the composite oxide was 67.6% of titanium dioxide, 4.7% of cobalt and 27.7% of aluminium. Also, the appearance color was light blue and the interference color was green.

### Example 4

A pleochroism powder of Ti-Co-Al composite oxide coated type in accordance with one example of the present invention was manufactured according to Fig. 1 (c).

1000.00 parts by weight of water was added with respect to 100.00 parts by weight of titanium dioxide coated mica which was same with Example 1 in terms of the content of titanium dioxide (i.e., the layer thickness of titanium dioxide which was coated on mica) and the solution was stirred and dispersed. 8.91 parts by weight of cobalt chloride hydrate (CoCl₂·6H₂O) and 54.21 parts by weight of aluminium sulfate hydrate (Al₂(SO₄)₃·14H₂O) were dissolved to water so as to make a solution. The latter was dripped down to the former and the mixture was heated up to 80°C while stirring. 2 mol/liter of sodium hydroxide solution (NaOH) was further dripped down thereto and the pH of the solution was adjusted to 9. The generated Ti-Co-Al composite oxide coated mica was filtered and washed with water. After drying it for 12 hours at 150°C, it was calcinated for 1 hour at 900°C.

In the resulting pleochroism powder of Ti-Co-Al composite oxide coated type, mole ratio of the composite oxide was 73.5% of titanium dioxide, 3.9% of cobalt and 22.6% of aluminium. Also, the appearance color was light blue and the interference color was yellow.

### Example 5

A pleochroism powder of Ti-Co-Al composite oxide coated type in accordance with one example of the present invention was manufactured according to Fig. 1 (c).

1000.00 parts by weight of water was added with respect to 100.00 parts by weight of titanium dioxide coated mica which was same with Example 1 in terms of the content of titanium dioxide (i.e., the layer thickness of titanium dioxide which was coated on mica) and the solution was stirred and dispersed. 5.95 parts by weight of cobalt chloride hydrate (CoCl₂·6H₂O) and 36.14 parts by weight of aluminium sulfate hydrate (Al₂(SO₄)₃·14H₂O) were dissolved to water so as to make a solution. The latter was dripped down to the former and the mixture was heated up to 80°C while stirring. 2 mol/liter of sodium hydroxide solution (NaOH) was further dripped down thereto and the pH of the solution was adjusted to 9. The generated Ti-Co-Al composite oxide coated mica was filtered and washed with water. After drying it for 12 hours at 150°C, it was calcinated for 1 hour at 900°C.

In the resulting pleochroism powder of Ti-Co-Al composite oxide coated type, mole ratio of the composite oxide was 80.7% of titanium dioxide, 2.8% of cobalt and 16.5% of aluminium. Also, the appearance color was light blue and the interference color was yellow.

### Example 6

A pleochroism powder of Ti-Co-Al composite oxide coated type in accordance with one example of the present invention was manufactured according to Fig. 1 (c).

100.00 parts by weight of titanium dioxide coated mica which was same with Example 1 in terms of the content of titanium dioxide (i.e., the layer thickness of titanium dioxide which was coated on mica), 8.16 parts by weight of cobalt oxide (CoO) and 24.19 parts by weight of aluminium oxide (Al₂O₃) were mixed and the mixture was calcinated for 1 hour at 900°C.

In the resulting pleochroism powder of Ti-Co-Al composite oxide coated type, mole ratio of the composite oxide was 55.6% of titanium dioxide, 12.2% of cobalt and 32.2% of aluminium. Also, the appearance color was blue green and the interference color was yellow.

### Example 7

A pleochroism powder of Ti-Co-Al composite oxide coated type in accordance with one example of the present invention was manufactured according to Fig. 1 (b).

1000.00 parts by weight of water, 25.91 parts by weight of cobalt chloride hydrate (CoCl₂·6H₂O), 27.37 parts by weight of aluminium sulfate hydrate (Al₂(SO₄)₃·14H₂O) and 44.8 parts by weight of urea were dissolved so as to make a solution. 100.00 parts by weight of titanium dioxide coated mica which was same with Example 1 in terms of the content of titanium dioxide (i.e., the layer thickness of titanium dioxide which was coated on mica) was added thereto and the mixture was heated up to 100°C and refluxed for 4 hours. The generated Ti-Co-Al composite oxide coated mica was filtered and washed with water. After drying it for 12 hours at 150°C, it was calcinated for 1 hour at 900°C.

In the resulting pleochroism powder of Ti-Co-Al composite oxide coated type, mole ratio of the composite oxide was 60.0% of titanium dioxide, 27.5% of cobalt and 12.5% of aluminium. Also, the appearance color was yellow green and the interference color was yellow.

### Example 8

A pleochroism powder of Ti-Co-Al composite oxide coated type in accordance with one example of the present invention was manufactured according to Fig. 1 (c).

Namely, 1000.00 parts by weight of water was added with respect to 100.00 parts by weight of titanium dioxide coated mica and the solution was heated up to 80°C while stirring and dispersing. 11.89 parts by weight of cobalt chloride hydrate (CoCl₂·6H₂O) and 72.27 parts by weight of aluminium sulfate hydrate (Al₂(SO₄)₃·14H₂O) were dissolved to water so as to make a solution. The latter was dripped down to the former. On the other hand, 2 mol/liter of sodium hydroxide solution (NaOH) was simultaneously dripped down thereto while adjusting the pH of the solution to 9 until the mixed solution of cobalt chloride hydrate and aluminium sulfate hydrate was used up. The generated Ti-Co-Al composite oxide coated mica was filtered and washed with water. After drying it for 12 hours at 150°C, it was calcinated for 1 hour at 900°C.

In the resulting pleochroism powder of Ti-Co-Al composite oxide coated type, mole ratio of the composite oxide was 67.6% of titanium dioxide, 4.7% of cobalt and 27.7% of aluminium. Also, the appearance color was light blue and the interference color was yellow.

Then, the present inventors have studied for the special properties that are shown by the pleochroism powder of Ti-Co-Al composite oxide coated type of the present invention.

### Experiment 1

In the article that the coating composition which compounds the pleochroism powder of Ti-Co-Al composite oxide coated type in accordance with the present invention is coated on the substrate, it is found that the color of substrate which is the color tone of the base material influence so as that the pleochroism powder of Ti-Co-Al composite oxide coated type of the present invention displays its effects sufficiently. The appearance color and the interference color of the pleochroism powder of Ti-Co-Al composite oxide coated type are weakened by the color tone of the substrate since transparency of the pleochroism powder of Ti-Co-Al composite oxide coated type. Consequently, the color tone and multi-discoloring property of the pleochroism powder of Ti-Co-Al composite oxide coated type are hindered.

Thereupon, the present inventors have studied the relationship of the color of the substrate which is the color tone of the base material and the discoloration degree.

First, 4.5 parts by weight of nitrocellulose as a binder resin and 10.5 parts by weight of a solvent which is composed of 10 to 20% of butyl acetate, 5 to 10% of xylene, 5 to 10% of ethyl acetate, 5 to 10% of methyl ethyl ketone and 30 to 40% of toluene were used. The binder resin and the solvent were mixed. 4 parts by weight of the pleochroism powder of Ti-Co-Al composite oxide coated type of Example 1 that has light blue appearance color and yellow interference color was added and dispersed thereto so as to form a coating composition. The coating composition is referred to as Preparation 1.

An equivalent amount of the binder resin and the solvent, which are same with Preparation 1, was used. 4 parts by weight of the pleochroism powder of Ti-Co-Al composite oxide coated type of Example 2 that has light blue appearance color and red interference color was added and dispersed thereto so as to form a coating composition. The coating composition is referred to as Preparation 2.

These Preparations 1 and 2 were printed on the colored paper of each color separately by a screen printing (clearance : 110 µm). Colorimetry of these Preparations was conducted by a goniospectrophotometer and the discoloration degree was measured.

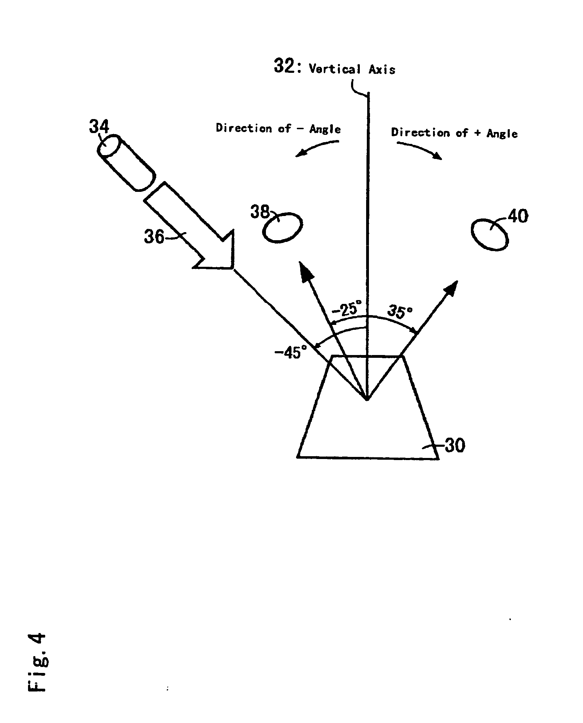

An explanatory view of a manufacturing method for measuring the discoloration degree of the pleochroism powder of Ti-Co-Al composite oxide coated type in accordance with the present invention is shown in Fig. 4. As shown in Fig. 4, a preparation 30 was printed with the coating composition which compounds the pleochroism powder of Ti-Co-Al composite oxide coated type of the present invention. A vertical axis 32 which faced to the preparation was established as a standard. White light 36 was irradiated from a direction of - 45° with a white light source 34. The lights that were received by a light receiver 38 and 40, which were arranged at -25° and 35°, respectively, were measured. The value of colorimetry was converted with Lab of Hunter and evaluated thereby.

The reason to measure the light at -25° and 35° was mentioned as follows. Only the appearance color can be observed at -25° with almost no influence by the interference color of the pleochroism powder of Ti-Co-Al composite oxide coated type. Also, a mixed color of the appearance color and the interference color can be observed at 35° because the interference color of the pleochroism powder of Ti-Co-Al composite oxide coated type strongly influences to the appearance color. Accordingly, it can be judged that the discoloration degree is larger if the color difference that is observed at these two points is large.

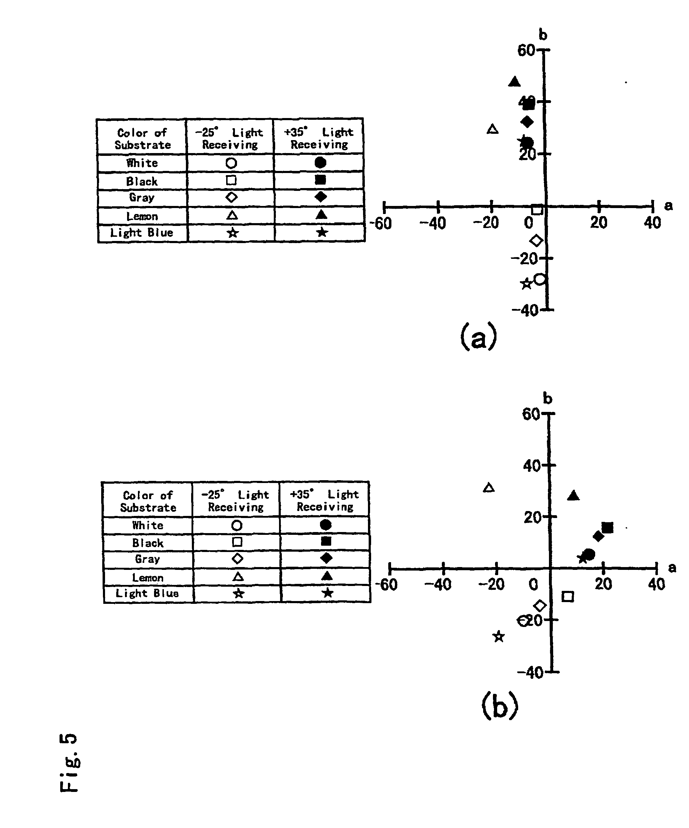

A part of the result of this measurement concerning Preparation 1 and Preparation 2 is shown in Tables 2 and 3, respectively. Also, ab views of Tables 2 and 3 is shown in Figs. 5 (a) and (b), respectively.

**Table 2**

| | Color of Substrate | | | -25° Light Receiving | | | 35° Light Receiving | | |
|---|---|---|---|---|---|---|---|---|---|
| Color of Substrate | L | a | b | L | a | b | L | a | b |
| White | 87.70 | 2.94 | -5.56 | 61.77 | -2.48 | -28.06 | 125.06 | -6.23 | 24.19 |
| Black | 18.53 | 0.11 | -0.60 | 44.97 | -3.20 | -1.01 | 118.82 | -5.61 | 38.92 |
| Gray | 53.99 | -1.77 | 1.41 | 52.85 | -3.32 | -12.91 | 121.47 | -6.01 | 32.62 |
| Lemon | 87.74 | -13.91 | 51.26 | 62.78 | -18.96 | 29.63 | 126.50 | -10.61 | 47.74 |
| Light Blue | 67.31 | -18.81 | -23.24 | 56.94 | -7.04 | -29.30 | 122.42 | -7.40 | 25.08 |

**Table 3**

| | Color of Substrate | | | -25° Light Receiving | | | 35° Light Receiving | | |
|---|---|---|---|---|---|---|---|---|---|
| Color of Substate | L | a | b | L | a | b | L | a | b |
| White | 87.7 | 2.94 | -5.56 | 69.62 | -10.02 | -20.23 | 117.16 | 14.65 | 5.43 |
| Black | 18.53 | 0.11 | -0.60 | 36.56 | 6.50 | -11.05 | 100.14 | 21.78 | 15.79 |
| Gray | 53.99 | -1.77 | 1.41 | 51.64 | -3.94 | -14.39 | 108.67 | 18.15 | 12.39 |
| Lemon | 87.74 | -13.91 | 51.26 | 66.01 | -22.53 | 31.35 | 111.31 | 8.85 | 28.16 |
| Light Blue | 67.31 | -18.81 | -23.24 | 60.98 | -19.32 | -26.24 | 112.71 | 12.29 | 3.99 |

As shown in Table 2, Fig. 5 (a), Table 3 and Fig. 5 (b), it is understood that the different color tone is shown according to the substrate color which is the color of the base material even if the pleochroism powder of Ti-Co-Al composite oxide coated type renders the same color each other. It is also understood that multi-discoloring property that is characteristic in the pleochroism powder of Ti-Co-Al composite oxide coated type of the present invention is influenced by the substrate color.

However, it is clearly understood from Figs. 5 (a) and (b) that the difference of the colorimetry values that are received at -25° and 30° is large and discoloring property is high if the substrate color is within gray scale of white to black achromatic color. It is also understood that the difference of the colorimetry values that are received at -25° and 30° is large and discoloring property is high if the substrate color is light blue that is same color with the object color of the powder. When the base material whose substrate color is light blue and is same with the object color of the powder, is used, it is understood that the observed appearance color becomes clearer since the substrate color influences on the appearance color of the pleochroism powder of Ti-Co-Al composite oxide coated type and synergistic effect is performed.

Accordingly, it is preferable that the color tone of the substrate that is coated by the coating composition which compounds the pleochroism powder of Ti-Co-Al composite oxide coated type of the present invention is within gray scale of white to black achromatic color or blue of yellow green to indigo blue that is similar color with the appearance color of the pleochroism powder of Ti-Co-Al composite oxide coated type. In both cases, it is preferable that the effects of the pleochroism powder of Ti-Co-Al composite oxide coated type of the present invention can be displayed satisfactory.

To the contrary, if the base material that has different substrate color as mentioned above, the color of the base material overcomes the appearance color and the interference color of the pleochroism powder of Ti-Co-Al composite oxide coated type and spoils discoloring property thereof. As a comparative example of the other color, lemon is shown in Table 2, Fig. 5 (a), Table 3 and Fig. 5 (b). It is clearly understood from Figs. 5 (a) and (b) that the difference of the values of colorimetry which are received at -25° and 35° is small and discoloring property which is characteristic in the pleochroism powder of Ti-Co-Al composite oxide coated type is hindered.

### Experiment 2

The present inventors have further studied concerning the relationship between the application thickness and the discoloration degree of the coating composition which compounds the pleochroism powder of Ti-Co-Al composite oxide coated type of the present invention.

Preparation 1 of said Experiment 1 was applied to the base material whose substrate color was within gray scale by a doctor blade with changing film thickness. In the similar manner to Experiment 1, white light was irradiated from a direction of -45° as shown in Fig. 4. The values of colorimetry that were received at -25° and 35° were converted with Lab of Hunter. The discoloration degree was calculated with the distance between -25° and 30° by forming ab view therefrom. It was confirmed that the color tone of the powder was not so much influenced by the substrate color when the film thickness is thickened.

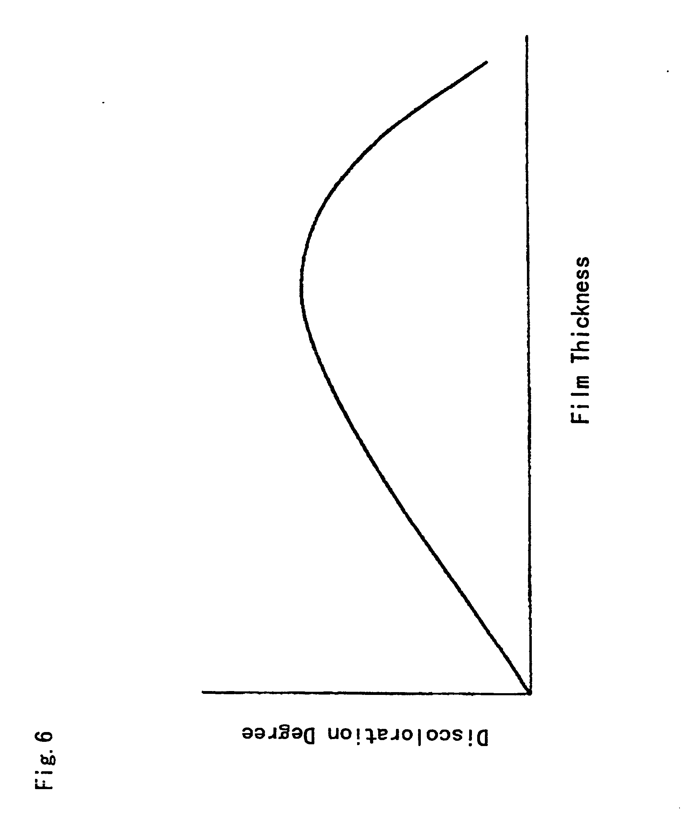

The relationship between the discoloration degree and the film thickness is shown in Fig. 6. As shown in Fig. 6, the discoloration degree comes to large continuously as the film thickness becomes to thicken if the film thickness is not extremely thickened. As a result of experiment, a favorable discoloration degree is shown in the base material whose color is within the range of white to L : 31.83 a : -0.01 b : 1.86 in the case where the application thickness is thinner than 30µm. On the other hand, in the case here the application thickness is 30µm or more, high discoloration degree is obtained within the whole range of white to black with no influence of the substrate color.

Accordingly, it is preferable that the application thickness of the coating composition which compounds the pleochroism powder of Ti-Co-Al composite oxide coated type of the present invention is within the ordinary range of the film thickness, i.e., 5µm or more and further, 20µm or more. It is more preferable that the application thickness of the coating composition is 30µm or more. In this case, it is possible to obtain the discoloration degree, which is not influenced by the substrate color.

As a result of Experiments 1 and 2, it is understood as follows. If the color tone of the base material to be coated by the coating composition which compounds the pleochroism powder of Ti-Co-Al composite oxide coated type of the present invention is not within gray scale of white to black achromatic color and blue of yellow green to indigo blue, it is right to paint the color of the base material to the similar color in advance by paint, colors or the other coloring means or it may apply the coating composition which compounds the pleochroism powder of Ti-Co-Al composite oxide coated type of the present invention to the base material whose application thickness is 30µm or more.

### Experiment 3

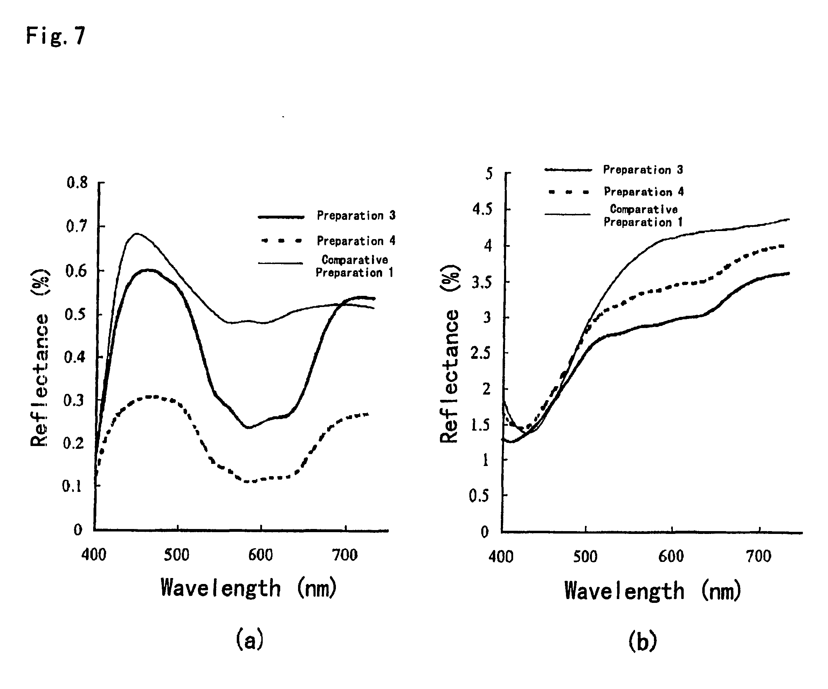

In next, Preparation 1 of the coating composition which used Example 1 was applied to the base materials whose substrate colors were white and gray so as that the film thickness might be 30µm, respectively. The base material whose color was white was referred to as Preparation 3 and, whose color was gray was referred to as Preparation 4. In the similar manner to the measurement method which was shown in Fig. 4, white light was irradiated to these Preparations 3 and 4, respectively, from a direction of -45°. Wavelength distribution of the reflected light at -25° and 35° was measured. As a Comparative object, the binder resin and the solvent those are same with the ones of Preparation 1 were mixed to titanium oxide coated mica which was used in Example 1 under the condition that cobalt aluminate is not coated thereto. Comparative Preparation 1 was prepared by applying the mixture to the base material whose substrate color was white and which has same film thickness with Preparations 3 and 4. Wavelength distribution of the reflected light at -25° and 35° was shown in Figs. 7 (a) and (b), respectively.

Since almost no interference color was detected, wavelength distribution at -25° which can observe the appearance color of the pleochroism powder of Ti-Co-Al composite oxide coated type is as follows. As shown in Fig. 7 (a), reflectance of short-wavelength side is high, while reflectance of long-wavelength side is low in both Preparations 3 and 4. It is also found that the difference between reflectance of short-wavelength side and reflectance of long-wavelength side is extremely great. To the contrary, Comparative Preparation 1 which is a coating film of titanium oxide coated mica has high reflectance in short-wavelength side and low reflectance in high-wavelength side. Nevertheless, it is found that the difference between reflectance of short-wavelength side and reflectance of long-wavelength side is not so much great and it is observed as whity on the whole.

Since the interference color was detected strongly, wavelength distribution at 35° which can observe the mixed color of the appearance color and the interference color of the pleochroism powder of Ti-Co-Al composite oxide coated type is as follows. As shown in Fig. 7 (b), reflectance of short-wavelength side is low, while reflectance of long-wavelength side is high in both Preparations 3 and 4. It is also found that the difference between reflectance of short-wavelength side and reflectance of long-wavelength side is extremely great. Comparative Preparation 1 which is a coating film of titanium oxide coated mica has low reflectance in short-wavelength side and high reflectance in long-wavelength side.

In case of studying discoloring property from these Figs. 7 (a) and (b), both Preparations 3 and 4 change from bluish color to yellow to orange. It is not too much to say that the discoloration degree is extremely high even the color is confirmed with naked eye. To the contrary, though Comparative Preparation 1 changes from whity to yellow to orange, nevertheless the discoloration from whity to yellow to orange was difficult to observe with naked eye since the discoloration degree is low.

### Experiment 4

Preparation 1 of the coating composition which used Example 1 was applied to the base material whose substrate color was white so as that the film thickness might be 30µm. The base material whose substrate color was white was referred to as Preparation 5. Examples 4 and 5 those have same appearance color and the interference color with the ones of Example 1 and have different ratio of TiO₂, Co and Al was mixed with the binder resin and the solvent those are same with the ones of Preparation 1, respectively. The mixture was applied to the base material whose substrate color was white so as that the film thickness might be same with Preparation 5. The base material formed with the coating film of Example 4 is referred to as Preparation 6 and the base material formed with the coating film of Example 5 is referred to as Preparation 7.

In the similar manner to the measurement method which was shown in Fig. 4, white light was irradiated to these Preparations 5 to 7, respectively, from a direction of -45°. The reflected light was received at an angle from -25° to 60° at intervals of 5°. The discoloration degree was studied by converting the value of colorimetry by Lab of Hunter. The result is shown in Table 4.

**Table 4**

| | Preparation 5 | | | Preparation 6 | | | Preparation 7 | | |
|---|---|---|---|---|---|---|---|---|---|
| Light Receiving Angle | L | a | b | L | a | b | L | a | b |
| -25 | 64.56 | -1.95 | -26.73 | 66.22 | -2.91 | -23.93 | 67.95 | -2.00 | -21.59 |
| -20 | 64.99 | -2.05 | -26.34 | 66.71 | -3.05 | -23.49 | 68.41 | -2.14 | -21.17 |
| -15 | 65.45 | -2.17 | -25.81 | 67.34 | -3.13 | -22.72 | 69.00 | -2.24 | -20.55 |
| -10 | 66.17 | -2.18 | -24.95 | 68.25 | -3.27 | -21.57 | 69.82 | -2.30 | -19.55 |
| -5 | 67.225 | -2.33 | -23.55 | 69.55 | -3.27 | -19.91 | 71.07 | -2.40 | -17.99 |
| 0 | 68.90 | -2.50 | -21.50 | 71.47 | -3.38 | -17.49 | 73.03 | -2.58 | -15.58 |
| 5 | 71.37 | -2.69 | -18.36 | 74.45 | -3.58 | -13.76 | 76.08 | -2.86 | -11.84 |
| 10 | 75.18 | -2.98 | -13.60 | 78.75 | -3.81 | -8.50 | 80.52 | -3.28 | -6.51 |
| 15 | 80.92 | -3.49 | -6.64 | 85.10 | -4.23 | -1.04 | 87.11 | -3.84 | 1.16 |
| 20 | 88.97 | -4.18 | 2.61 | 93.72 | -4.89 | 8.43 | 96.29 | -4.77 | 11.13 |
| 25 | 100.78 | -5.30 | 14.68 | 106.05 | -5.75 | 20.26 | 109.49 | -6.14 | 23.68 |
| 30 | 117.52 | -6.56 | 28.06 | 122.83 | -6.60 | 32.00 | 127.09 | -7.55 | 36.16 |
| 35 | 147.35 | -7.63 | 39.33 | 153.43 | -7.16 | 41.33 | 159.76 | -8.25 | 45.49 |
| 40 | 192.56 | -6.34 | 42.63 | 192.93 | -5.77 | 43.32 | 203.88 | -6.57 | 46.16 |
| 45 | 21.06 | -5.21 | 39.15 | 216.92 | -5.37 | 42.34 | 210.65 | -5.67 | 41.80 |
| 50 | 201.96 | -6.77 | 42.98 | 190.84 | -6.40 | 42.98 | 196.14 | -7.50 | 45.97 |
| 55 | 159.08 | -9.15 | 39.99 | 155.38 | -8.32 | 39.45 | 157.67 | -9.41 | 42.73 |
| 60 | 129.36 | -9.27 | 31.28 | 128.52 | -8.53 | 31.14 | 130.30 | -9.12 | 33.85 |
| 65 | 115.51 | -8.73 | 22.85 | 116.00 | -8.30 | 23.46 | 117.74 | -8.55 | 25.84 |

As is clear from Table 4, it is understood that Preparations 5 to 7 are discolored with change of its angle since the Lab value is changed according as increase of angle from -25°. In particular, if the discoloration degree is thought as the difference with the value at -25°, it is found that the largest discoloration degree is shown in the vicinity of 45°. It is also understood that the discoloring color returns to the former color even if the angle is increased 45° or more. It is also understood that the pleochroism powder of Ti-Co-Al composite oxide coated type of the present invention has high discoloring property if the greatest difference with -25° is considered.

### Experiment 5

Preparation 1 of the coating composition which used Example 1 was applied to the base materials whose colors were white and gray so as that the layer thickness might be 30µm, respectively. The base material whose color was white was referred to as Preparation 8 and whose color was gray was referred to as Preparation 9. Examples 2 and 3 those have same appearance color and different interference color with the ones of Example 1 and have same ratio of TiO₂, Co and Al was mixed with the binder resin and the solvent those are same with the ones of Preparation 1, respectively. The mixture was applied to the base materials whose colors were white or gray so as that the film thickness might be same with Preparations 8 and 9. The white base material formed with the coating film of Example 2, the gray base material formed with the coating film of Example 2, the white base material formed with the coating film of Example 3 and the gray base material formed with the coating film of Example 3 is referred to as Preparations 10, 11, 12 and 13, respectively.

In the similar manner to the measuring method of Experiment 4 as shown in Fig. 4, the discoloration degrees of Preparations 8 to 13 were studied as follows. White light was irradiated from a direction of -45°. The reflected light was received at an angle from -25° to 65° at intervals of 5°. The discoloration degree was studied by converting the value of colorimetry by Lab of Hunter.

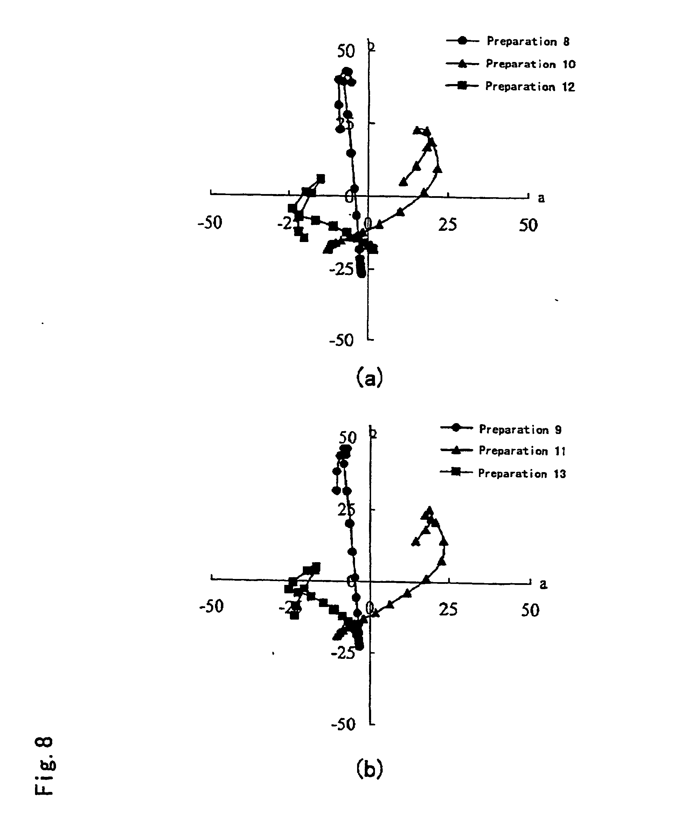

The result of Preparations 8, 10 and 12 whose substrate color is white and the result of Preparations 9, 11 and 13 whose substrate color is gray is shown in Tables 5 and 6, respectively. Also, ab views of Tables 5 and 6 is shown in Figs. 8 (a) and (b), respectively.

**Table 5**

| | Preparation 8 | | | Preparation 10 | | | Preparation 12 | | |
|---|---|---|---|---|---|---|---|---|---|
| Light Receiving Angle | L | a | b | L | a | b | L | a | b |
| -25 | 64.56 | -1.95 | -26.73 | 70.20 | -12.47 | -18.28 | 66.75 | 1.57 | -18.30 |
| -20 | 64.99 | -2.05 | -26.34 | 70.52 | -12.44 | -17.78 | 66.89 | 1.66 | -18.30 |
| -15 | 65.45 | -2.17 | -25.81 | 70.80 | -12.22 | -17.34 | 67.11 | 1.63 | -18.19 |
| -10 | 66.17 | -2.18 | -24.95 | 71.17 | -11.89 | -16.78 | 67.46 | 1.43 | -17.98 |
| -5 | 67.225 | -2.33 | -23.55 | 71.64 | -11.19 | -16.32 | 68.03 | 1.04 | -17.64 |
| 0 | 68.90 | -2.50 | -21.50 | 72.32 | -10.02 | -15.82 | 69.04 | 0.13 | -16.87 |
| 5 | 71.37 | -2.69 | -18.36 | 73.39 | -8.34 | -15.06 | 70.61 | -1.26 | -15.80 |
| 10 | 75.18 | -2.98 | -13.60 | 75.08 | -5.57 | -14.02 | 73.11 | -3.31 | -14.30 |
| 15 | 80.92 | -3.49 | -6.64 | 77.79 | -1.62 | -12.30 | 77.08 | -6.47 | -12.33 |
| 20 | 88.97 | -4.18 | 2.61 | 82.20 | 3.83 | -9.44 | 83.05 | -10.79 | -10.24 |
| 25 | 100.78 | -5.30 | 14.68 | 89.15 | 10.40 | -5.14 | 92.42 | -16.34 | -8.23 |
| 30 | 117.52 | -6.56 | 28.06 | 101.32 | 17.56 | 1.39 | 106.66 | -21.91 | -6.70 |
| 35 | 147.35 | -7.63 | 39.33 | 124.77 | 21.64 | 9.80 | 130.95 | -23.80 | -4.38 |
| 40 | 192.56 | -6.34 | 42.63 | 177.73 | 19.76 | 18.91 | 178.55 | -19.55 | 1.44 |
| 45 | 21.06 | -5.21 | 39.15 | 203.41 | 15.41 | 22.82 | 213.89 | -14.83 | 5.86 |
| 50 | 201.96 | -6.77 | 42.98 | 186.43 | 18.21 | 22.60 | 184.23 | -17.91 | 0.97 |
| 55 | 159.08 | -9.15 | 39.99 | 138.69 | 18.46 | 17.11 | 139.76 | -21.69 | -7.13 |
| 60 | 129.36 | -9.27 | 31.28 | 111.34 | 15.28 | 10.65 | 115.27 | -21.90 | -12.17 |
| 65 | 115.51 | -8.73 | 22.85 | 100.10 | 11.35 | 5.15 | 102.83 | -20.05 | -14.32 |

**Table 6**

| | Preparation 9 | | | Preparation 11 | | | Preparation 13 | | |
|---|---|---|---|---|---|---|---|---|---|
| Light Receiving Angle | L | a | b | L | a | b | L | a | b |
| -25 | 47.59 | -3.13 | -22.95 | 50.59 | -10.19 | -19.08 | 49.01 | -3.82 | -18.26 |
| -20 | 48.56 | -3.22 | -21.70 | 51.10 | -9.74 | -18.43 | 49.39 | -3.91 | -17.84 |
| -15 | 49.64 | -3.31 | -20.20 | 51.51 | -9.13 | -17.82 | 49.49 | -4.05 | -17.35 |
| -10 | 51.30 | -3.36 | -18.16 | 52.28 | -8.20 | -16.98 | 50.85 | -4.49 | -16.52 |
| -5 | 53.60 | -3.47 | -15.30 | 53.31 | -6.78 | -16.03 | 52.23 | -5.46 | -15.40 |
| 0 | 56.95 | -3.78 | -11.25 | 54.83 | -4.76 | -14.75 | 54.23 | -6.63 | -14.08 |
| 5 | 61.69 | -4.18 | -5.80 | 57.08 | -1.94 | -13.09 | 57.27 | -8.47 | -12.15 |
| 10 | 67.92 | -4.67 | 1.15 | 60.25 | 1.91 | -10.92 | 61.58 | -11.07 | -9.93 |
| 15 | 76.42 | -5.36 | 10.07 | 64.73 | 6.57 | -7.91 | 67.40 | -14.42 | -7.72 |
| 20 | 87.12 | -6.17 | 20.14 | 71.21 | 12.13 | -3.88 | 75.75 | -18.54 | -5.61 |
| 25 | 101.54 | -7.25 | 31.35 | 80.47 | 17.92 | 1.15 | 87.27 | -22.79 | -4.18 |
| 30 | 121.21 | -8.13 | 40.74 | 95.95 | 22.66 | 7.52 | 104.91 | -25.73 | -3.02 |
| 35 | 155.30 | -8.31 | 46.10 | 123.73 | 23.37 | 14.32 | 132.02 | -24.48 | -0.57 |
| 40 | 191.73 | -7.30 | 46.13 | 170.80 | 20.78 | 20.89 | 172.43 | -19.77 | 3.43 |
| 45 | 208.08 | -7.63 | 43.89 | 197.64 | 17.68 | 23.28 | 193.99 | -16.91 | 4.81 |
| 50 | 191.26 | -7.53 | 45.45 | 181.92 | 18.82 | 25.05 | 181.97 | -17.19 | 3.71 |
| 55 | 157.29 | -9.42 | 43.56 | 141.16 | 19.36 | 22.11 | 144.09 | -20.71 | -2.81 |
| 60 | 127.85 | -10.36 | 38.06 | 109.57 | 17.75 | 18.18 | 117.12 | -23.55 | -8.87 |
| 65 | 112.93 | -10.39 | 31.46 | 95.43 | 14.79 | 14.15 | 101.11 | -23.93 | -12.09 |

It is understood from the result as described hereinbefore, though the observation color is same, the different discoloring property is shown when the layer thickness of titanium dioxide is different. Also it is understood that the discoloring property is great.

### Experiment 6

In general, if the discoloration of the coating which is coated on the base material is changed according as the viewing angle is observed, it is mainly observed by rotating the base material without changing light source and the observation positions. It is because lighting or the other light source is fixed in most cases in the case where the persons observe the base material with holding their hands. It is also because that the rotation of the base material that is held by hand is easier than the change of observation angle with movement of head. It is regarded that the sum of the incident angle of irradiation light and the light receiving angle which observe the reflected light from the substrate is maintained constantly since it is considered that the light source and observation positions are not moved practically in this condition. It is studied whether the discoloration degree is displayed sufficiently in the condition that the sum of the incident angle and light receiving angle is maintained constantly.

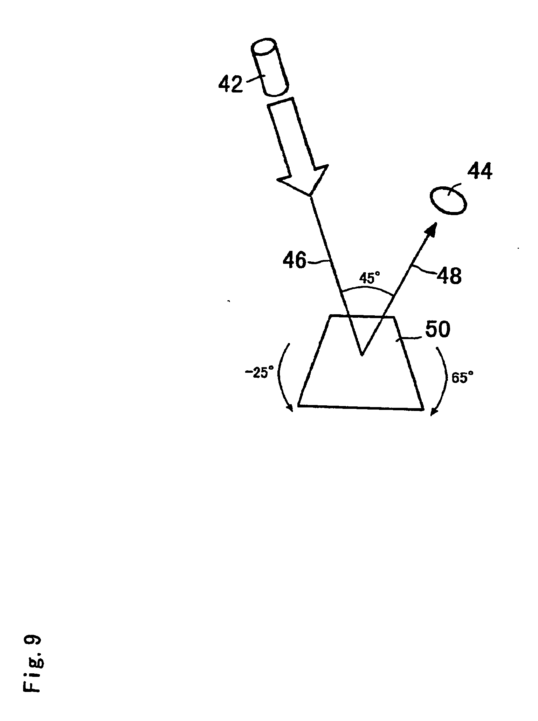

Fig. 9 is an explanatory view showing a summary of the measuring method of Experiment 6. As shown in Fig. 9, the sum of the angle determined by an optical axis 46 of a white light source 42 and a light-receiving direction axis 48 of a light receiver 44 was fixed so as that the angle might be 45°. A base material 50 is inclined so as that its angle might be within the range from -25° to 60° to vertical axis of the ground. The colorimetry value of the reflected light, which was received by the light receiver 44, was converted with Lab of Hunter and the discoloration degree was measured. As a measuring object, Preparations 8 to 13 that were used in said Experiment 5 were used.

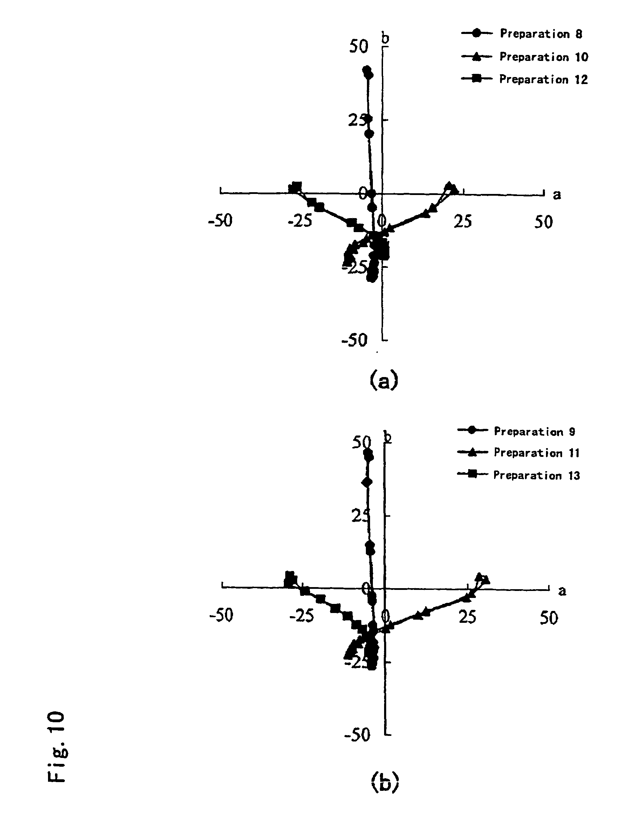

The result of Preparations 8, 10 and 12 whose substrate color is white and the result of Preparations 9, 11 and 13 whose substrate color is gray is shown in Tables 7 and 8, respectively. Also, ab views of Tables 7 and 8 is shown in Figs. 10 (a) and (b), respectively.

**Table 7**

| | Preparation 8 | | | Preparation 10 | | | Preparation 12 | | |
|---|---|---|---|---|---|---|---|---|---|
| Light Receiving Angle | L | a | b | L | a | b | L | a | b |
| -25 | 63.81 | -3.17 | -26.26 | 67.64 | -9.47 | -22.02 | 65.78 | -0.62 | -19.22 |
| -20 | 64.63 | -2.96 | -26.40 | 68.77 | -9.88 | -21.47 | 66.39 | 0.01 | -19.03 |
| -15 | 65.15 | -2.81 | -26.31 | 69.46 | -10.06 | -20.73 | 66.79 | 0.51 | -18.75 |
| -10 | 65.77 | -2.58 | -25.70 | 70.13 | -10.11 | -19.91 | 67.11 | 0.89 | -18.43 |
| -5 | 66.89 | -2.47 | -24.33 | 70.91 | -9.67 | -18.86 | 67.79 | 0.86 | -17.93 |
| 0 | 69.15 | -2.50 | -21.35 | 72.31 | -8.30 | -17.59 | 69.10 | -0.01 | -16.67 |
| 5 | 74.53 | -2.71 | -14.51 | 74.81 | -4.76 | -15.40 | 72.68 | -2.68 | -14.40 |
| 10 | 86.28 | -3.22 | -0.23 | 80.52 | 2.59 | -11.71 | 81.41 | -9.13 | -10.01 |
| 15 | 112.87 | -4.39 | 25.33 | 96.11 | 15.36 | -4.88 | 103.69 | -21.26 | -3.31 |
| 20 | 177.07 | -4.28 | 40.17 | 154.23 | 20.23 | 2.84 | 163.78 | -26.10 | 2.15 |
| 25 | 162.43 | -4.78 | 41.79 | 138.24 | 21.99 | 1.71 | 146.42 | -27.42 | 1.21 |
| 30 | 106.34 | -4.12 | 20.06 | 91.94 | 13.41 | -6.72 | 97.97 | -19.03 | -4.87 |
| 35 | 82.88 | -3.01 | -4.87 | 78.90 | 0.82 | -13.12 | 78.87 | -7.04 | -11.72 |
| 40 | 72.90 | -2.43 | -17.73 | 74.29 | -5.80 | -16.85 | 71.74 | -1.50 | -16.09 |
| 45 | 68.87 | -2.28 | -23.75 | 72.44 | -8.66 | -19.13 | 69.18 | 0.59 | -18.48 |
| 50 | 67.57 | -2.34 | -26.65 | 72.02 | -9.83 | -20.84 | 68.52 | 1.20 | -19.94 |
| 55 | 67.58 | -2.54 | -28.15 | 72.23 | -10.25 | -22.16 | 68.96 | 1.03 | -20.81 |
| 60 | 68.39 | -2.92 | -28.76 | 73.34 | -10.47 | -23.27 | 69.97 | 0.46 | -21.22 |
| 65 | 69.46 | -3.46 | -28.64 | 74.01 | -10.49 | -23.50 | 71.21 | -0.26 | -21.07 |

**Table 8**

| | Preparation 9 | | | Preparation 11 | | | Preparation 13 | | |
|---|---|---|---|---|---|---|---|---|---|
| Light Receiving Angle | L | a | b | L | a | b | L | a | b |
| -25 | 45.96 | -4.19 | -24.86 | 49.36 | -10.37 | -21.06 | 48.32 | -4.77 | -20.40 |
| -20 | 46.64 | -3.94 | -24.34 | 50.07 | -10.26 | -20.66 | 48.69 | -4.39 | -19.97 |
| -15 | 47.60 | -3.85 | -23.18 | 50.77 | -9.98 | -19.73 | 49.09 | -4.07 | -19.33 |
| -10 | 49.02 | -3.58 | -21.44 | 51.55 | -9.22 | -18.71 | 49.93 | -4.22 | -18.21 |
| -5 | 51.54 | -3.55 | -18.20 | 52.84 | -7.67 | -17.21 | 51.60 | -4.91 | -16.57 |
| 0 | 56.08 | -3.71 | -12.39 | 55.16 | -4.54 | -15.06 | 54.92 | -6.88 | -13.84 |
| 5 | 64.45 | -3.98 | -2.39 | 59.43 | 1.56 | -12.12 | 61.96 | -11.16 | -9.42 |
| 10 | 80.18 | -4.76 | 14.85 | 68.48 | 12.26 | -7.55 | 76.33 | -19.15 | -3.76 |
| 15 | 108.15 | -5.44 | 36.52 | 86.69 | 26.12 | -1.39 | 107.34 | -29.02 | 1.49 |
| 20 | 164.49 | -5.03 | 44.94 | 147.36 | 28.58 | 4.50 | 161.58 | -28.78 | 4.22 |
| 25 | 161.67 | -5.41 | 46.56 | 134.27 | 30.68 | 3.52 | 136.17 | -27.98 | 2.83 |
| 30 | 106.47 | -5.67 | 36.18 | 83.90 | 24.54 | -2.74 | 89.98 | -24.10 | -1.06 |
| 35 | 78.75 | -4.57 | 12.72 | 66.27 | 9.98 | -8.92 | 68.37 | -14.69 | -6.89 |
| 40 | 63.93 | -3.85 | -4.14 | 58.57 | 0.10 | -13.48 | 52.24 | -8.69 | -12.25 |
| 45 | 56.08 | -3.47 | -14.37 | 55.03 | -5.32 | -16.61 | 53.54 | -5.66 | -16.09 |
| 50 | 52.30 | -3.30 | -20.16 | 53.46 | -8.05 | -18.87 | 51.51 | -4.36 | -18.67 |
| 55 | 50.73 | -3.39 | -23.64 | 53.12 | -9.57 | -20.62 | 51.06 | -3.98 | -20.32 |
| 60 | 50.49 | -3.69 | -25.57 | 53.47 | -10.44 | -21.78 | 51.44 | -4.28 | -21.38 |
| 65 | 50.82 | -4.07 | -26.54 | 54.20 | -10.96 | -22.58 | 52.29 | -4.91 | -21.75 |

It is confirmed from the result as described hereinbefore, that the pleochroism powder of Ti-Co-Al composite oxide coated type of the present invention has great discoloring property, even when the color of the base material is observed in the condition that the sum of the incident angle of the irradiation light and the light-receiving angle which observe the reflected light from the base material is maintained constantly.

### Experiment 7

Comparative experiment was performed concerning the multi-discoloring property of the pleochroism powder of Ti-Co-Al composite oxide coated type of the present invention that is obtained by said Example 1 so as to confirm whether the multi-discoloring property can be obtained by only the material which coats Ti-Co-Al composite oxide.

Titanium oxide coated mica (Comparative Example 1), mica coated with cobalt (Comparative Example 2), mica coated with aluminium (Comparative Example 3), titanium oxide coated mica coated with cobalt (Comparative Example 4), titanium oxide coated mica coated with aluminium (Comparative Example 5), and only Ti-Co-Al composite oxide (Comparative Example 6) were used as a comparative object. The amounts of the metals such as titanium dioxide, cobalt and aluminium that were coated on the surface of mica to be compounded in these Comparative Examples were adjusted so as that the amount might be the same with the ones of the metals compounded in Example 1.

Comparison of color tone is as follows. A composition that is shown in Table 9 is formed from each preparation. The preparation was applied to a black paper by a doctor blade so as that the film thickness thereof might be 30µm. After drying the obtained color paper, light is irradiated from -45° as shown in Fig. 4. The light was observed at -25° and 35° with naked eye. The discoloration degrees were evaluated as follows: change of color was favorable : ○ change of color was difficult to observe : Δ color was not changed : ×.

**Table 9**

| | |
|---|---|
| Preparation | 15 wt% |
| Nitrocellulose | 10 wt% |
| Butyl Cellosolve | 10 wt% |
| Naphtha | 20 wt% |
| Cyclohexane | 45 wt% |

The result is shown in Table 10.

**Table 10**

| | Example 1 | Comp. Ex. 1 (TiO₂+ Mica) | Comp. Ex. 2 (Co+ Mica) | Comp. Ex. 3 (Al+ Mica) | Comp. Ex. 4 (Co+Tio₂+ Mica) | Comp. Ex. 5 (Al+Tio₂+ Mica) | Comp. Ex. 6 (Al+Co+ Tio₂₎ |
|---|---|---|---|---|---|---|---|
| -25° Obs. Color | Blue | White | Brown | White | Green | White | Blue |
| 35° Obs. Color | Yellow | Yellow | Brown | White | Yellow | Yellow | Blue |
| Discoloration degree | ○ | Δ | × | × | Δ | Δ | × |

As is clear from Table 10, the pleochroism powder of Ti-Co-Al composite oxide coated type has different color as compared with the composite oxide that has the same metal ratio, and the composite oxide coated mica that is an intermediate. In particular, though the multi-discoloring property of the color tone is not observed practically in the composite oxide coated mica which comprises one or two of the metals such as Ti, Co and Al, nevertheless the multi-discoloring property of the color tone was observed clearly in the pleochroism powder of Ti-Co-Al composite oxide coated type. Accordingly, it is understood that the pleochroism powder of Ti-Co-Al composite oxide coated type of the present invention has the color tone and multi-discoloring property which is obtained peculiarly by coating the composite oxide of three kinds of metal such as Ti, Co and Al on mica.

The compounding examples of the present invention are exemplified in the following. However, the present invention is not restricted thereto. The amount is shown by wt% without otherwise stated.

| Compounding Example 1 Gravure Ink | |
|---|---|
| Pleochroism Powder of Ti-Co-Al Composite Oxide Coated Type | 30.0% |
| Ethylene-Vinyl Acetate Copolymer Resin | 7.5 |
| Chlorinated Polypropylene | 5.5 |
| Toluene | 28.0 |
| Ethyl Acetate | 8.5 |
| Methyl Ethyl Ketone | 17.0 |
| Isopropyl Alcohol | 2.5 |
| Polyethylene Wax | 0.8 |
| Antistatic Agent | 0.2 |

| Compounding Example 2 Gravure Ink | |
|---|---|
| Pleochroism Powder of Ti-Co-Al Composite Oxide Coated Type | 15.0% |
| Polyamide Resin | 15.0 |
| Rosin Ester | 4.0 |
| Nitrocellulose | 3.0 |
| Isopropyl Alcohol | 46.0 |
| Ethyl Acetate | 5.0 |
| Toluene | 10.0 |
| Polyethylene Wax | 2.0 |

| Compounding Example 3 Gravure Ink | |
|---|---|
| Pleochroism Powder of Ti-Co-Al Composite Oxide Coated Type | 20.0% |
| Hardened Rosin | 15.0 |
| Petroleum Resin | 10.0 |
| Toluene | 55.0 |

| Compounding Example 4 Gravure Ink | |
|---|---|
| Pleochroism Powder of Ti-Co-Al Composite Oxide Coated Type | 30.0% |
| Nitrocellulose | 10.0 |
| Butyl Cellosolve | 10.0 |
| Naphtha | 25.0 |
| Cyclohexane | 25.0 |

| Compounding Example 5 Gravure Ink | |
|---|---|
| Pleochroism Powder of Ti-Co-Al Composite Oxide Coated Type | 14.0% |
| Ethylene-Vinyl Acetate Copolymer Resin | 7.2 |
| Chlorinated Polypropylene | 5.8 |
| Toluene | 58.0 |
| Ethyl Acetate | 11.0 |
| Isopropyl Alcohol | 3.0 |
| Polyethylene Wax | 0.8 |
| Antistatic Agent | 0.2 |

| Compounding Example 6 Gravure Ink | |
|---|---|
| Pleochroism Powder of Ti-Co-Al Composite Oxide Coated Type | 15.0% |
| Acrylic Resin | 20.0 |
| Naphtha | 35.0 |
| Butyl Cellosolve | 30.0 |

| Compounding Example 7 Screen Ink | |
|---|---|
| Pleochroism Powder of Ti-Co-Al Composite Oxide Coated Type | 15.0% |
| Nitrocellulose | 15.0 |
| Cyclohexane | 40.0 |
| Isophorone | 10.0 |
| Naphtha | 10.0 |
| Dibutylphthalate | 10.0 |

| Compounding Example 8 Screen Ink | |
|---|---|
| Pleochroism Powder of Ti-Co-Al Composite Oxide Coated Type | 20.0% |
| Nitrocellulose | 20.0 |
| Cyclohexane | 45.0 |
| Isophorone | 10.0 |
| Dioctylphthalate | 5.0 |

Then, the special characteristic that was shown by the pleochroism powder of mixed type was investigated.

### Experiment 8

The titanium dioxide coated mica, which generates reflected interference color of a gold color tone, was mixed well with each inorganic pigment that is shown in Table 11 by using small mill. Incidentally, the mixing quantity of each inorganic pigment was 1.0, 2.5, 5.0, 10.0, 25.0, and 50.0wt%. Similarly, the titanium dioxide coated mica, which generates reflected interference color of a gold color tone, was mixed well with each organic pigment and dye that is shown in Table 11 by using small mill. Incidentally, the mixing quantity of each organic pigment and dye was 0.5, 1.0, 3.0, and 10.0wt%. Consequently, several pleochroism powders of mixed type that the addition quantities of pigment or dye differ were obtained. Each 1g of pleochroism powder of mixed type was added to 15g of nitrocellulose lacquer No. 6341™ (produced by Musashi paint Co. Inc.). The mixture stirred and dispersed by dispersal machine. Each obtained composites were applied on hiding power test papers of white-and-black by a doctor blade (clearance: 101 µm). In that way, the printed articles were made.

The white light was irradiated to that obtained printed articles, and the change of the colors were observed by visual observation each time the observation angle was changed to above-mentioned white incident light. Then, the range of changes of the hue and the height of chroma, which each powder showed, was determined. And the mixing quantity of each pigment and dye, that can change the hue most largely and can be observed the high chroma finely, was determined.

In all of four kinds of inorganic pigments that are shown in following Table 11, the powders, which 10.0wt% of pigment was added, showed the biggest change of the hue within the range of gold to blue and high chroma in visual observation. In the one organic pigment and two organic dyes that are shown in following Table 11, the powders, which 0.5wt% or 1.0wt% of pigment or dye was added, showed the biggest change of the hue within the range of gold to blue and high chroma in visual observation.

Also, the printed articles which 10.0wt% of inorganic pigment were added and the printed articles which 1.0wt% of organic pigment or dye were added were observed. Consequently, the result, which was entered in following Table 11, was obtained by the determination of the change of the hue and height of chroma. Incidentally, the change of the hue and height of chroma were evaluated as follows: very favorable : ⓞ favorable : ○ normal : Δ bad : ×.

**Table 11**

| Name of pigment or dye | Color tone | Classification | Mixing quantity (wt%) | Change of the hue | Height of chroma |
|---|---|---|---|---|---|
| Purussian Blue Formula : FeK[Fe(CN)₆] | Blue | Inorganic Pigment | 1.0, 2.5, 5.0, 10.0, 25.0, 50.0 | ○ | Δ |
| Milori Blue Formula: FeK[Fe(CN)₆] : 50%+Mica:50% | Blue | Inorganic Pigment | 1.0, 2.5, 5.0, 10.0, 25.0, 50.0 | ○ | Δ |
| Cobalt Blue Formula: CoAl₂O₄ | Blue | Inorganic Pigment | 1.0, 2.5, 5.0, 10.0, 25.0, 50.0 | ⓞ | ⓞ |
| Ultramarine Blue Formula: Na₆Al₆Si₆O₂₄Sₓ | Blue | Inorganic Pigment | 1.0, 2.5, 5.0, 10.0, 25.0, 50.0 | ○ | ⓞ |
| Copper Phthalocyanine Blue | Blue | Organic Pigment | 0.50, 1.0, 3.0, 10.0 | ⓞ | ⓞ |
| Brilliant Blue | Blue | Organic Dye | 0.50, 1.0, 3.0, 10.0 | Δ | ○ |
| Quinzarine Green | Blue to Green | Organic Dye | 0.50, 1.0, 3.0, 10.0 | Δ | ○ |

The printed articles that the fine result in change of the hue and height of chroma were obtained as shown in Table 11 were the one that used the pleochroism powder that added cobalt blue and copper phthalocyanine blue.

### Experiment 9

Next, light resistance of the pleochroism powder of mixed type was examined.

The titanium dioxide coated mica, which generates reflected interference color of a gold color tone, was mixed well with each inorganic pigment that is shown in Table 11 by using small mill. Incidentally, the mixing quantity of each inorganic pigment was 10.0wt%. Similarly, the titanium dioxide coated mica, which generates reflected interference color of a gold color tone, was mixed well with each organic pigment and dye that is shown in Table 11 by using small mill. Incidentally, the mixing quantity of each organic pigment and dye was 1.0wt%. Consequently, several pleochroism powders of mixed type were obtained.

Each pleochroism powder was inserted in the cell which was made of fused quartz, and then its were irradiated by xenon lamp for 30 hours (Illuminance : 285W/m², integrated dose : about 30MJ/m²). The color differences, which were caused by the light irradiation, were measured by measuring the colors of those pleochroism powders before the light was irradiated and after by using spectrophotometric colorimeter (CM-1000™ : produced by Minolta Camera Co. Inc).

While, Each 1g of pleochroism powder of mixed type, which were prepared with the method similar to the above, was added to 15g of nitrocellulose lacquer No. 6341™ (produced by Musashi paint Co. Inc.). the mixture was agitated and was dispersed by dispersal machine. Each obtained composites were applied on hiding power test papers of white-and-black by a doctor blade (clearance: 101 µm). The printed articles, which were made in that way, were irradiated by xenon lamp for 30 hours (Illuminance : 285W/m², integrated dose : about 30MJ/m²), too. The color difference, which was caused by the light irradiation, was measured by measuring the colors of those printed articles before the light was irradiated and after by using spectrophotometric colorimeter (CM-1000™ : produced by Minolta Camera Co. Inc).

Incidentally, the pleochroism powder of Ti-Co-Al composite oxide coated type and the articles using the same were used as comparative example 7.

The measured result of the color difference which were displayed by the each pleochroism powder of mixed type and the printed articles is shown in table 12.

**Table 12**

| Added pigment or dye | | | The color difference which was caused by the light irradiation of xenon lamp for 30 hours | | |
|---|---|---|---|---|---|
| Name of pigment or dye | Classification | Mixing quantity(wt%) | Powder in cell | Article which a composite was printed onto white paper | Article which a composite was printed onto black paper |
| Purussian Blue | Inorganic Pigment | 10.0 | 2.21 | 4.45 | 2.20 |
| Milori Blue | Inorganic Pigment | 10.0 | 3.08 | 3.47 | 1.23 |
| Cobalt Blue | Inorganic Pigment | 10.0 | 0.44 | 3.31 | 0.92 |
| Ultramarine Blue | Inorganic Pigment | 10.0 | 0.56 | 3.13 | 2.00 |
| Copper Phthalocyanine Blue | Organic Pigment | 1.0 | 6.32 | 2.57 | 1.75 |
| Brilliant Blue | Organic Dye | 1.0 | 1.66 | 18.93 | 4.96 |
| Quinzarine Green | Organic Dye | 1.0 | 5.61 | 19.39 | 6.03 |
| Comp. Ex. 7 | - | - | 0.45 | 2.63 | 1.52 |

In table 12, It can be regarded that the observed color of each printed article, which each powder was printed onto white paper, was appearance color of each powder and the observed color of each printed article, which each powder was printed onto black paper, was color in the condition where the reflected interference color of each pleochroism powder was generated.

As shown in Table 12, The color difference, which the pleochroism powders of mixed type and the printed articles that were added the organic pigment and dyes showed, tend to be big. However, it was showed that the pleochroism powder of mixed type that was added the cobalt blue had a high light resistance as well as comparative example 7 that was the pleochroism powder of Ti-Co-Al composite oxide coated type.

From the result of experiment 8 and experiment 9, it was understood that cobalt blue was very excellent thing as a blue pigment which was mixed to titanium dioxide coated mica.

The relation between mixing quantity of cobalt blue and color tone of the pleochroism powder was studied in detail.

The titanium dioxide coated mica, which generates reflected interference color of a gold color tone, was mixed well with cobalt blue by using small mill. Incidentally, the mixing quantity of cobalt blue was 1.0, 2.5, 5.0, 10.0, 25.0, and 50.0wt%. Consequently, several pleochroism powders of mixed type that the addition quantities of cobalt blue differ were obtained. Each 1g of pleochroism powder of mixed type was added to 15g of nitrocellulose lacquer No. 6341™ (produced by Musashi paint Co. Inc.). The mixture was agitated and was dispersed by dispersal machine. Each obtained composites were applied on hiding power test papers of white-and-black by a doctor blade (clearance: 101 µm). In that way, the printed articles were made.

The white light was irradiated to that obtained printed articles, and the change of the colors were observed by visual observation each time the observation angle was changed to above-mentioned white incident light. Then, the range of changes of the hue and the height of chroma, which each powder showed, was determined. And the mixing quantity of each pigment and dye, that can change the hue most largely and can be observed the high chroma finely, was determined.

The colors of those printed articles were observed by visual observation. The printed article, which cobalt blue was added 1.0wt%, was not able to observe sufficient discoloring property, as the blue was thin. However, The printed articles, which cobalt blue were added 2.5wt% or more, were able to observe high discoloring property in the range of gold to blue. But the printed articles, which cobalt blue were added 40wt% or more, lost the shining property that was peculiar property of pearl agent, as the blue was too dark.

Also, The colors of those printed articles, which the colors of base papers were white, were measured by a goniospectrophotometer (produced by Murakami color technology research institute Co. Inc., GCMS-3type GSP-1™). The measurement method is similar to the method that used in above-mentioned experiment 4 and 5. Incident angle of incident white light was set up to 45 degree. The light receiving angles were set up from -25° to 65° in 5° interval and the value of colorimetry was measured. Then, the value of colorimetry was converted with Lab of Hunter.

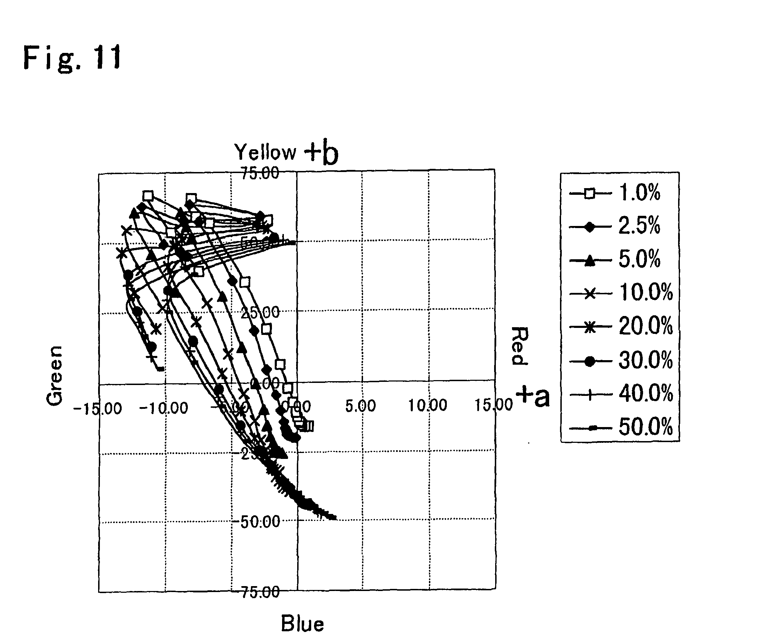

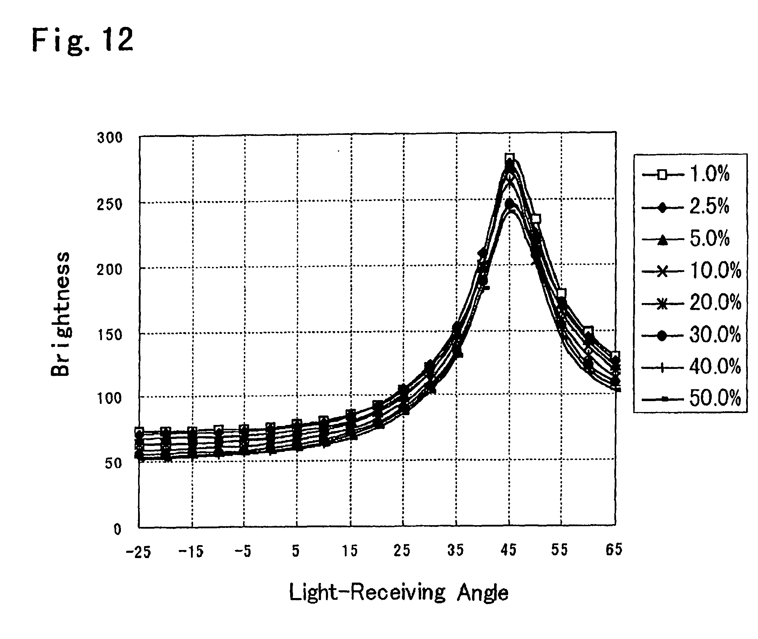

The obtained result was shown in table 13,14 and 15 below. Also, a graph of the relation between the light receiving angle and the discoloring of a pleochroism printed articles that was made from that result is shown in Fig. 11. And, a graph of the relation between the light receiving angle and the brightness of a pleochroism printed article that was made from that result is shown in Fig. 12.

Also, the difference of the values of colorimetry which was measured at the light receiving angle was -25 degree and +35 degree was shown in Table 16, as color difference (Δ Lab), hue difference (Δ ab), brightness difference (Δ L).

**Table 13**

| Light Receiving Angle | 1.0% | | | 2.5% | | | 5.0% | | |
|---|---|---|---|---|---|---|---|---|---|
| | L | a | b | L | a | b | L | a | b |
| -25 | 73.29 | 0.92 | -15.87 | 71.63 | -0.07 | -20.11 | 68.04 | -1.13 | -25.59 |
| -20 | 73.60 | 0.66 | -15.68 | 71.97 | -0.33 | -19.84 | 68.39 | -1.34 | -25.27 |
| -15 | 73.97 | 0.41 | -15.32 | 72.40 | -0.57 | -19.38 | 68.85 | -1.56 | -24.76 |
| -10 | 74.43 | 0.25 | -14.81 | 72.94 | -0.74 | -18.73 | 69.41 | -1.67 | -24.09 |
| -5 | 75.08 | 0.14 | -14.03 | 73.63 | -0.81 | -17.89 | 70.18 | -1.75 | -23.15 |
| 0 | 76.12 | 0.06 | -12.75 | 74.81 | -0.89 | -16.43 | 71.39 | -1.84 | -21.60 |
| 5 | 77.92 | -0.10 | -10.62 | 76.76 | -1.03 | -14.08 | 73.39 | -1.99 | -19.26 |
| 10 | 80.72 | -0.31 | -7.33 | 79.89 | -1.26 | -10.31 | 76.41 | -2.23 | -15.41 |
| 15 | 85.25 | -0.67 | -2.00 | 84.74 | -1.61 | -4.49 | 81.12 | -2.54 | -9.72 |
| 20 | 92.28 | -1.24 | 6.10 | 92.61 | -2.24 | 4.68 | 88.73 | -3.09 | -0.68 |
| 25 | 103.88 | -2.24 | 18.85 | 104.76 | -3.25 | 18.16 | 100.42 | -4.12 | 12.58 |
| 30 | 120.85 | -3.88 | 35.92 | 123.28 | -4.90 | 36.64 | 118.26 | -5.70 | 30.93 |
| 35 | 148.98 | -6.55 | 56.74 | 153.05 | -7.45 | 57.15 | 146.86 | -7.96 | 51.97 |
| 40 | 197.79 | -7.99 | 65.65 | 208.80 | -8.09 | 63.51 | 198.29 | -8.81 | 60.65 |
| 45 | 279.93 | -2.15 | 57.56 | 276.14 | -2.73 | 59.25 | 272.96 | -3.02 | 57.02 |
| 50 | 234.66 | -7.62 | 59.01 | 218.17 | -8.62 | 58.03 | 223.73 | -8.29 | 55.53 |
| 55 | 177.86 | -11.29 | 66.83 | 172.02 | -11.68 | 63.07 | 170.26 | -12.27 | 60.66 |
| 60 | 147.90 | -9.47 | 53.37 | 144.40 | -10.08 | 49.45 | 141.85 | -11.01 | 46.25 |
| 65 | 129.00 | -7.44 | 40.01 | 126.16 | -8.21 | 36.26 | 123.14 | -9.25 | 32.34 |

**Table 14**

| Light Receiving Angle | 10.0% | | | 20.0% | | | 30.0% | | |
|---|---|---|---|---|---|---|---|---|---|
| | L | a | b | L | a | b | L | a | b |
| -25 | 63.66 | -1.37 | -32.53 | 59.34 | -0.53 | -39.51 | 55.51 | 0.95 | -45.04 |
| -20 | 64.10 | -1.59 | -32.00 | 59.86 | -0.73 | -38.89 | 56.17 | 0.63 | -44.31 |
| -15 | 64.71 | -1.76 | -31.34 | 60.53 | -0.97 | -38.11 | 56.88 | 0.37 | -43.48 |
| -10 | 65.43 | -1.89 | -30.50 | 61.34 | -1.13 | -37.14 | 57.76 | 0.13 | -42.38 |
| -5 | 66.34 | -1.96 | -29.31 | 62.39 | -1.29 | -35.79 | 58.84 | -0.18 | -40.96 |
| 0 | 67.81 | -2.11 | -27.46 | 63.89 | -1.54 | -33.84 | 60.51 | -0.57 | -38.81 |
| 5 | 70.08 | -2.36 | -24.62 | 66.21 | -1.92 | -30.85 | 62.94 | -1.07 | -35.72 |
| 10 | 73.60 | -2.71 | -20.26 | 69.80 | -2.44 | -26.37 | 66.56 | -1.83 | -31.13 |
| 15 | 78.86 | -3.19 | -13.79 | 75.06 | -3.19 | -19.84 | 71.79 | -2.91 | -24.55 |
| 20 | 87.13 | -3.97 | -3.90 | 83.15 | -4.27 | -9.98 | 79.51 | -4.24 | -15.13 |
| 25 | 99.35 | -5.14 | 9.98 | 95.03 | -5.65 | 3.63 | 90.76 | -5.92 | -2.30 |
| 30 | 117.61 | -6.84 | 28.56 | 112.31 | -7.59 | 21.33 | 107.54 | -7.91 | 14.56 |
| 35 | 147.17 | -9.23 | 48.76 | 141.99 | -9.75 | 41.40 | 135.73 | -9.75 | 32.95 |
| 40 | 200.12 | -8.64 | 56.58 | 198.95 | -8.66 | 51.37 | 187.86 | -8.40 | 44.78 |
| 45 | 270.30 | -2.62 | 55.67 | 262.92 | -2.13 | 54.35 | 246.35 | -1.65 | 51.28 |
| 50 | 211.66 | -8.76 | 52.81 | 202.77 | -9.13 | 48.81 | 211.68 | -8.87 | 46.57 |
| 55 | 164.82 | -12.90 | 54.51 | 157.27 | -13.20 | 46.73 | 153.58 | -12.84 | 38.92 |
| 60 | 137.35 | -11.85 | 40.29 | 130.92 | -12.33 | 32.41 | 124.29 | -12.06 | 25.45 |
| 65 | 119.27 | -10.20 | 26.86 | 113.44 | -10.73 | 19.22 | 109.44 | -11.02 | 13.34 |

**Table 15**

| Light Receiving Angle | 40.0% | | | 50.0% | | |
|---|---|---|---|---|---|---|
| | L | a | b | L | a | b |
| -25 | 53.49 | 1.85 | -47.79 | 52.30 | 2.54 | -49.70 |
| -20 | 54.18 | 1.54 | -47.04 | 52.98 | 2.30 | -48.94 |
| -15 | 54.91 | 1.29 | -46.22 | 53.75 | 1.89 | -48.00 |
| -10 | 55.83 | 0.96 | -45.03 | 54.63 | 1.52 | -46.92 |
| -5 | 57.04 | 0.58 | -43.44 | 55.83 | 1.15 | -45.36 |
| 0 | 58.69 | 0.12 | -41.35 | 57.43 | 0.62 | -43.30 |
| 5 | 61.12 | -0.55 | -38.23 | 59.81 | -0.09 | -40.25 |
| 10 | 64.74 | -1.46 | -33.59 | 63.25 | -1.10 | -35.86 |
| 15 | 69.89 | -2.67 | -27.11 | 68.20 | -2.40 | -29.64 |
| 20 | 77.63 | -4.23 | -17.66 | 75.54 | -4.05 | -20.74 |
| 25 | 88.63 | -6.03 | -5.09 | 86.21 | -5.94 | -8.60 |
| 30 | 105.08 | -8.13 | 11.45 | 102.37 | -8.01 | 7.41 |
| 35 | 132.78 | -9.87 | 29.42 | 130.40 | -9.84 | 25.14 |
| 40 | 182.20 | -8.50 | 41.33 | 181.65 | -8.00 | 38.41 |
| 45 | 246.28 | -1.02 | 50.45 | 240.12 | -0.55 | 49.31 |
| 50 | 207.67 | -8.66 | 44.02 | 199.92 | -8.60 | 40.85 |
| 55 | 148.91 | -12.84 | 35.26 | 143.89 | -12.74 | 30.33 |
| 60 | 120.44 | -12.02 | 21.44 | 116.37 | -11.72 | 16.56 |
| 65 | 106.04 | -11.01 | 9.42 | 102.45 | -10.61 | 4.87 |

**Table 16**

| Mixing quantity of Cobalt Blue | Light Receiving Angle : -25° | | | Light Receiving Angle : -35° | | | Difference of the value of colorimetry | | |
|---|---|---|---|---|---|---|---|---|---|
| | L | a | b | L | a | b | Δ (Lab): color difference | Δ (L): brightness difference | Δ (ab): hue difference |
| 1.0% | 73.29 | 0.92 | -15.87 | 148.98 | -6.55 | 56.74 | 105.2 | 75.7 | 73.0 |
| 2.5% | 71.63 | -0.07 | -20.11 | 153.05 | -7.45 | 57.15 | 112.5 | 81.4 | 77.6 |
| 5.0% | 68.04 | -1.13 | -25.59 | 146.86 | -7.96 | 51.97 | 110.8 | 78.8 | 77.9 |
| 10.0% | 63.66 | -1.37 | -32.53 | 147.17 | -9.23 | 48.76 | 116.8 | 83.5 | 81.7 |
| 20.0% | 59.34 | -0.53 | -39.51 | 141.99 | -9.75 | 41.40 | 116.0 | 82.7 | 81.4 |
| 30.0% | 55.51 | 0.95 | -45.04 | 135.73 | -9.75 | 32.95 | 112.4 | 80.2 | 78.7 |
| 40.0% | 53.49 | 1.85 | -47.79 | 132.78 | -9.87 | 29.42 | 111.3 | 79.3 | 78.1 |
| 50.0% | 52.20 | 2.54 | -49.70 | 130.40 | -9.84 | 25.14 | 108.9 | 78.1 | 75.9 |

Referring to Table 13, 14, 15, 16 and Figure 11, 12, it understood that the contrast of the hue by the change of the observation angle to incident light was big in the case of the addition quantity of cobalt blue was 2.5 to 30.0wt%. Especially, in the case of addition quantity of cobalt blue to printed article was 10.0 to 20.0wt%, the contrast of the hue was big because hue difference and brightness difference were big. Consequently, it was shown that beautiful discoloring property were observed.

Also, in the pleochroism powder of mixed type, it is preferable that the mixing quantity of inorganic pigment to the titanium oxide coated mica is 2.5 to 30.0wt%, especially 10.0 to 20.0wt%.

Furthermore, it is preferable that the thing of the constitution as shown in below, in the case that discoloring property is given to printed article.

A printed article that is applied: a composition that comprising a titanium dioxide coated mica which generates reflected interference color by coated titanium dioxide on a mica surface onto a base material; and transparent colored composition that comprising a pigment or a dye that have a color tone which is in the relation of the nearly complementary color to reflection interference color that said titanium dioxide coated mica generates onto said a composition, or a composition that mixed a titanium dioxide coated mica which generates reflected interference color by coated titanium dioxide on a mica surface and transparent colored composition that comprising a pigment or a dye that have a color tone which is in the relation of the nearly complementary color to reflection interference color that said titanium dioxide coated mica generates onto a base material.

These printed articles become to be observed the different color tone by changing the observation angle to incident light. However, it needs to prepare so as not to be hindered that the reflection interference color of titanium oxide coated mica is observed by a transparent colored composite and the colored condition of a transparent colored composite is not too deep or not too thin.

As explained hereinbefore, according to the pleochroism powder of Ti-Co-Al composite oxide coated type in accordance with the present invention, a different color tone can be perceived according to the viewing angle by forming the composite oxide layer which comprises titanium, cobalt and aluminium onto mica.

Also, the article in accordance with the present invention, the base material is able to be imparted multi-discoloring property of color tone.

## Claims

1. A pleochroism powder which comprises:
a flaky mica having a titanium oxide coating layer on the surface of said flaky mica and a coating layer of a composite oxide of cobalt and aluminum upon said titanium oxide coating layer, wherein a mole ratio of metal in said coating layers is 50 to 98% of titanium dioxide, 1 to 49% of cobalt and 1 to 49 % of aluminum.

2. The pleochroism powder according to claim 1, wherein a mole ratio of said metal in said coating layers is 50 to 91.5% of titanium dioxide, 7.5 to 49% of cobalt and 1 to 20% of aluminum.

3. The pleochroism powder according to claim 1, wherein a mole ratio of said metal in said coating layers is 50 to 96.5% of titanium dioxide, 2.5 to 7.5% of cobalt and 1 to 47.5 % of aluminum.

4. The pleochroism powder according to claim 1, wherein a mole ratio of said metal in said coating layers is 50 to 72.5% of titanium dioxide, 7.5 to 30% of cobalt and 20 to 42.5% of aluminum.

5. The pleochroism powder according to claim 1, wherein a mole ratio of said metal in said coating layers is 50 to 98% of titanium dioxide, 1 to 2.5% of cobalt and 1 to 49% of aluminum.

6. The pleochroism powder according to any one of claims 1 to 5, wherein a hue of appearance color which is rendered by the pleochroism powder is within a range: a : -31.13 to 11.35; b: -29.46 to 31.22; and L: 30.82 to 88.23 in the case where the hue is displayed by Lab of Hunter.

7. A pleochroism printed article wherein a composition comprising said pleochroism powder as mentioned in any one of claims 1 to 6 is applied onto a base material,
said pleochroism printed article showing a different color tone by changing the observation angle to incident light.

8. The pleochroism printed article according to claim 7, wherein a color tone of the base material is within gray scale of white to black.

9. The pleochroism printed article according to claim 7, wherein a color tone of the base material is blue.

10. The pleochroism printed article according to claim 7, wherein a film thickness of the composition comprising said pleochroism powder that is applied onto the base material, is 5µm or more.

## Patentansprüche

1. Pleochroitisches Pulver, das umfasst:
blättrigen Glimmer mit einer Titanoxidbeschichtungsschicht auf der Oberfläche des blättrigen Glimmers und einer Beschichtungsschicht aus einem Mischoxid von Cobalt und Aluminium auf der Titanoxidbeschichtungsschicht, wobei der Molanteil der Metalle in den Beschichtungsschichten 50 bis 98 % Titandioxid, 1 bis 49 % Cobalt und 1 bis 49 % Aluminium beträgt.

2. Pleochroitisches Pulver nach Anspruch 1, wobei der Molanteil der Metalle in den Beschichtungsschichten 50 bis 91,5 % Titandioxid, 7,5 bis 49 % Cobalt und 1 bis 20 % Aluminium beträgt.

3. Pleochroitisches Pulver nach Anspruch 1, wobei der Molanteil der Metalle in den Beschichtungsschichten 50 bis 96,5 % Titandioxid, 2,5 bis 7,5 % Cobalt und 1 bis 47,5 % Aluminium beträgt.

4. Pleochroitisches Pulver nach Anspruch 1, wobei der Molanteil der Metalle in den Beschichtungsschichten 50 bis 72,5 % Titandioxid, 7,5 bis 30 % Cobalt und 20 bis 42,5 % Aluminium beträgt.

5. Pleochroitisches Pulver nach Anspruch 1, wobei der Molanteil der Metalle in den Beschichtungsschichten 50 bis 98 % Titandioxid, 1 bis 2,5 % Cobalt und 1 bis 49 % Aluminium beträgt.

6. Pleochroitisches Pulver nach einem der Ansprüche 1 bis 5, wobei der Ton der Erscheinungsfarbe, der durch das pleochroitische Pulver verliehen wird, im Bereich von a: -31,13 bis 11,35; b: -29,46 bis 31,22; und L: 30,82 bis 88,23 liegt, wenn der Ton durch Lab von Hunter angegeben wird.

7. Pleochroitischer bedruckter Gegenstand, wobei eine Zusammensetzung, die das in einem der Ansprüche 1 bis 6 genannte pleochroitische Pulver umfasst, auf ein Basismaterial appliziert wird,
wobei der pleochroitische bedruckte Gegenstand bei Änderung des Beobachtungswinkels zu einfallendem Licht einen unterschiedlichen Farbton zeigt.

8. Pleochroitischer bedruckter Gegenstand nach Anspruch 7, wobei der Farbton des Basismaterials in der Grauskala zwischen Weiß und Schwarz liegt.

9. Pleochroitischer bedruckter Gegenstand nach Anspruch 7, wobei der Farbton des Basismaterials blau ist.

10. Pleochroitischer bedruckter Gegenstand nach Anspruch 7, wobei die Filmdicke der das pleochroitische Pulver umfassenden Zusammensetzung, die auf das Basismaterial appliziert wird, 5 µm oder mehr beträgt.

## Revendications

1. Poudre pléochroïque, qui comprend :
un mica en paillettes ayant une couche de revêtement en oxyde de titane sur la surface dudit mica en paillettes et une couche de revêtement en un oxyde composite de cobalt et d'aluminium sur ladite couche de revêtement en oxyde de titane, dans laquelle le rapport molaire des métaux dans lesdites couches de revêtement est de 50 à 98 % de dioxyde de titane, 1 à 49 % de cobalt et 1 à 49 % d'aluminium.

2. Poudre pléochroïque selon la revendication 1, dans laquelle le rapport molaire desdits métaux dans lesdites couches de revêtement est de 50 à 91,5 % de dioxyde de titane, 7,5 à 49 % de cobalt et de 1 à 20 % d'aluminium.

3. Poudre pléochroïque selon la revendication 1, dans laquelle le rapport molaire desdits métaux dans lesdites couches de revêtement est de 50 à 96,5 % de dioxyde de titane, 2,5 à 7,5 % de cobalt et 1 à 47,5 % d'aluminium.

4. Poudre pléochroïque selon la revendication 1, dans laquelle le rapport molaire desdits métaux dans lesdites couches de revêtement est de 50 à 72,5 % de dioxyde de titane, 7,5 à 30 % de cobalt et 20 à 42,5 % d'aluminium.

5. Poudre pléochroïque selon la revendication 1, dans laquelle le rapport molaire desdits métaux dans lesdites couches de revêtement est de 50 à 98 % de dioxyde de titane, 1 à 2,5 % de cobalt et 1 à 49 % d'aluminium.

6. Poudre pléochroïque selon l'une quelconque des revendications 1 à 5, dans laquelle une teinte de couleur d'aspect qui est rendue par la poudre pléochroïque est dans la gamme : a : -31,13 à 11,35 ; b : -29,46 à 31,22 ; et L : 30,82 à 88,23 dans le cas où la teinte est présentée par le laboratoire Hunter.

7. Article imprimé pléochroïque, dans lequel une composition comprenant ladite poudre pléochroïque telle que mentionnée selon l'une quelconque des revendications 1 à 6 est appliquée sur un matériau de base, ledit article imprimé pléochroïque présentant un ton de couleur différent en changeant l'angle d'observation par rapport à la lumière incidente.

8. Article imprimé pléochroïque selon la revendication 7, dans lequel le ton de couleur du matériau de base est dans l'échelle des gris, du blanc au noir.

9. Article imprimé pléochroïque selon la revendication 7, dans lequel le ton de couleur du matériau de base est bleu.

10. Article imprimé pléochroïque selon la revendication 7, dans lequel l'épaisseur de film de la composition comprenant ladite poudre pléochroïque qui est appliquée sur le matériau de base est de 5 µm ou plus.
